# EUROPÄISCHE PATENTSCHRIFT

(11) **EP 3 552 287 B1**
(45) Veröffentlichungstag und Bekanntmachung des Hinweises auf die Patenterteilung: **31.07.2024**
(21) Anmeldenummer: 17808078.4
(22) Anmeldetag: 01.12.2017
(51) Int. Cl.: H02H 1/00, F16P 3/00, H01H 9/50, H02H 5/12

(54) **VERFAHREN ZUR ABSCHALTUNG EINES LICHTBOGENS IN EINER ELEKTRISCHEN ANLAGE**
METHOD FOR SWITCHING OFF AN ARC IN AN ELECTRICAL INSTALLATION
PROCÉDÉ DE COUPURE D'UN ARC ÉLECTRIQUE DANS UNE INSTALLATION ÉLECTRIQUE

(30) Priorität: 09.12.2016 DE 102016123953
(43) Veröffentlichungstag der Anmeldung: 16.10.2019
(73) Patentinhaber: Eaton Intelligent Power Limited, Dublin 4 (IE)
(72) Erfinder: REUBERGER, Georg, 3931 Schweiggers (AT)
(74) Vertreter: Epping - Hermann - Fischer
(86) Internationale Anmeldenummer: PCT/EP2017/081245
(87) Internationale Veröffentlichungsnummer: WO 2018/104181

(56) Entgegenhaltungen:
- EP-A1- 2 696 460
- EP-A2- 2 424 059
- DE-U1- 202012 001 729
- DE-U1- 202012 001 729
- US-A1- 2014 071 569

## Beschreibung

### TECHNISCHES GEBIET

Die Erfindung betrifft eine elektrische Anlage mit einem Schaltschrank, einen im Schaltschrank angeordneten Schutzschalter und zumindest eine mit dem Schutzschalter wirkverbundene optische Auslöseeinrichtung, welche dazu ausgebildet ist, den Schutzschalter bei optischer Erkennung eines Lichtbogens auszulösen beziehungsweise auszuschalten. Weiterhin betrifft die Erfindung ein Verfahren zur Sicherung einer elektrischen Anlage und eines in oder an der elektrischen Anlage befindlichen Bedienpersonals, wobei die elektrische Anlage einen Schaltschrank umfasst, einen im Schaltschrank angeordneten Schutzschalter, sowie zumindest eine mit dem Schutzschalter wirkverbundene optische Auslöseeinrichtung, welche den Schutzschalter bei Erkennung eines Lichtbogens auslöst beziehungsweise ausschaltet.

### STAND DER TECHNIK

Ein solches Verfahren und eine solche Vorrichtung sind grundsätzlich bekannt und werden beispielsweise eingesetzt, um etwa Menschen und/oder die Anlage selbst vor den zerstörerischen Auswirkungen eines durch einen Kurzschluss verursachten Lichtbogens zu schützen oder um wenigstens dessen Auswirkungen abzumildern. Beispielsweise können Tiere oder auch herunterfallendes Werkzeug sowie (feuchter) Schmutz die Isolation beziehungsweise die Funkenstrecke zwischen zwei Leitern auf unterschiedlichem Spannungspotential derart herabsetzen, dass ein solcher Lichtbogen entsteht. Durch die teils sehr hohen resultierenden Ströme kann es zu heftigen Explosionen aufgrund der sich in kurzer Zeit aufheizenden Luft kommen.

Häufig werden elektrische Anlagen daher auf das Auftreten eine solchen Störlichtbogens überwacht, was in vielen Fällen durch die Messung des über die elektrischen Leiter fließenden Stroms und die Detektion des emittierten Lichts, das von dem Lichtbogen ausgeht, erfolgt. Sind beide Kriterien erfüllt, kann ein Alarmsignal ausgegeben werden, beziehungsweise ein Schaltsignal zum Schließen einer Verbindung niedriger Impedanz zwischen den genannten Leitern auf unterschiedlichem Spannungspotential, insbesondere eines Schalters zwischen diesen Leitern. Dies hat einerseits zur Folge, dass der Lichtbogen rasch gelöscht wird, andererseits auch, dass sehr hohe Ströme in den Zuleitungen auftreten, welche einen übergeordneten Überstromschalter auslösen, der letztlich die gefährdete Stelle vom Netz trennt. Selbstverständlich kann das genannte Schaltsignal aber auch direkt zum Öffnen eines Schalters oder mehrerer Schalter in den Zuleitungen zum Lichtbogen dienen.

In der Regel sind die optischen Auslöseeinrichtungen zur Ausschaltung beziehungsweise Auslösung eines Schutzschalters im Schaltschrank fix verbaut und überwachen dort sensible Bereiche. Beispielsweise kann das von einem Überwachungsbereich ausgehende Licht per Lichtleiter an die optische Auslöseeinrichtung geführt werden.

Die EP 2 696460 A1 offenbart dazu einen Schaltschrank, der mehrere Sammelschienen und Leistungsschalter umfasst. Mindestens einer der Leistungsschalter enthält eine Auslöseeinheit mit einer Schnittstelle zu einem Störlichtbogensensor, welcher dem Schaltschrank zugeordnet ist. Die Auslöseeinheit löst zumindest einen der Leistungsschalter und einen Kurzschlussschalter aus, wenn ein entsprechender Strom über den Leistungsschalter fließt und ein Störlichtbogensignal vom Störlichtbogensensor vorliegt.

Die EP 2 424 059 A2 offenbart zudem eine Schutzeinrichtung für einen Stromkreis mit einem Stromsensor zum Messen eines Stroms durch einen Leiter des Stromkreises und einem Spannungssensor zum Messen einer Spannung über einer Vielzahl von Leitern des Stromkreises. Die Schutzeinrichtung umfasst weiterhin ein Steuergerät, das mit dem Stromsensor und dem Spannungssensor verbunden ist und abhängig von den empfangenen Werten eine erste Schutzeinrichtung oder eine zweite Schutzeinrichtung für den Stromkreis aktiviert.

Bekannt sind auch mobile optische Auslöseeinrichtung zur Ausschaltung beziehungsweise Auslösung eines Schutzschalters. Diese werden in der Regel temporär eingesetzt und können auch außerhalb des Schaltschranks angeordnet werden. Insbesondere kann eine solche optische Auslöseeinrichtung von einer Person getragen werden, um diese zu schützen. Detektiert die von der Person getragene optische Auslöseeinrichtung einen Lichtbogen, so wird der Schutzschalter ausgeschaltet beziehungsweise ausgelöst und schützt die Person vor den Auswirkungen des Lichtbogens. Auf diese Weise können zum Beispiel auch elektrische Anlagen beziehungsweise Schaltschränke geschützt werden, die ansonsten keinen Schutz gegen das Auftreten eines Lichtbogens aufweisen, oder es können Bereiche elektrischer Anlagen beziehungsweise von Schaltschränken geschützt werden, die ansonsten keinen Schutz gegen das Auftreten eines Lichtbogens aufweisen. Problematisch ist dabei, dass sich die außerhalb des Schaltschranks angeordnete optische Auslöseeinrichtung in der Regel in einem schwer einschätzbaren Umfeld befindet. Beispielsweise können andere Ereignisse als ein Lichtbogen zu einer Fehlauslösung des Schutzschalters führen, zum Beispiel grelle Lichtblitze, von denen an sich keine Gefahr ausgeht.

Ein Beispiel dafür ist eine Blitz einer Fotokamera, mit der ein Bild der elektrischen Anlage gemacht wird, sowie flackernde Lampen und dergleichen. Zudem können in elektrischen Anlagen Lichtbögen auch im normalen Betrieb auftreten, beispielsweise in Form von Schaltlichtbögen beim Trennen eines stromführenden Schaltkontakts. Der Schaltlichtbogen kann direkt sichtbar sein und/oder es kann leuchtenden Gas aus dem Schaltgerät austreten, das von den abbrennenden Schaltkontakten oder Lichtbogenleitbeziehungsweise Lichtbogenlöschblechen des Schaltgeräts stammt.

Blickt die Person in die Richtung des betreffenden Lichtblitzes, beziehungsweise ist die mobile optische Auslöseeinrichtung darauf ausgerichtet, so wird das mit der optischen Auslöseeinrichtung gekoppelte beziehungsweise wirkverbundene Schaltgerät ausgeschaltet/ausgelöst, unabhängig davon, ob von dem Lichtblitz eine potentielle Gefahr ausgeht und unabhängig davon, ob das der optischen Auslöseeinrichtung zugeordnete Schaltgerät den Lichtblitz überhaupt beeinflussen, das heißt löschen kann.

Unter Umständen führen solche harmlose Auslöser zu schwerwiegenden Konsequenzen, beispielsweise wenn mit der elektrischen Anlage sicherheitskritische Verbraucher versorgt werden, die unnötigerweise abgeschaltet werden. Beispiele sind medizinische Anlagen, Computerserver, technische Anlagen mit instabilen Prozessen und dergleichen.

### OFFENBARUNG DER ERFINDUNG

Eine Aufgabe ist es daher, eine verbesserte elektrische Anlage sowie ein verbessertes Verfahren zum Betrieb einer solchen Anlage anzugeben. Insbesondere soll ein gefährlicher Lichtbogen sicher erkannt und eine unnötige Abschaltung einer elektrischen Anlage vermieden werden.

Diese Aufgabe wird mit einer Vorrichtung der eingangs genannten Art gelöst, zusätzlich umfassend
- eine Detektionseinrichtung zur Erkennung eines Zutritts zu einem gesicherten Bereich der elektrischen Anlage durch Erkennen der Anwesenheit der zumindest einen optischen Auslöseeinrichtung in einem Gefahrenbereich der elektrischen Anlage und
- eine elektronische Schaltung, welche mit der Detektionseinrichtung verbunden ist und eine Auslösung beziehungsweise ein Ausschalten des Schutzschalters durch die zumindest eine optische Auslöseeinrichtung bei Erkennung eines Zutritts ermöglicht, wenn die optische Auslöseeinrichtung im Gefahrenbereich anwesend ist, und andernfalls verhindert,
- wobei eine Wirkverbindung zwischen dem Schutzschalter und der optischen Auslöseeinrichtung drahtlos hergestellt ist.

Die Aufgabe der Erfindung wird weiterhin mit einem Verfahren der eingangs genannten Art gelöst, bei dem der Schutzschalter durch die zumindest eine optische Auslöseeinrichtung nur dann ausgelöst beziehungsweise ausgeschaltet wird, wenn ein Zutritt zu einem gesicherten Bereich der elektrischen Anlage durch Erkennen der Anwesenheit der zumindest einen optischen Auslöseeinrichtung in einem Gefahrenbereich der elektrischen Anlage erkannt wird, wobei eine Wirkverbindung zwischen dem Schutzschalter und der optischen Auslöseeinrichtung drahtlos hergestellt ist.

Ist die optische Auslöseeinrichtung im Gefahrenbereich, so ist ein Ausschalten des Schutzschalters durch die zumindest eine optische Auslöseeinrichtung grundsätzlich möglich. Ist die optische Auslöseeinrichtung außerhalb des Gefahrenbereichs, so ist dies nicht möglich.

Auf diese Weise wird verhindert, dass die optische Auslöseeinrichtung einen Schutzschalter in einem gesicherten Bereich auslöst, von dem gar keine Gefahr ausgeht beziehungsweise in dem sich keine gefährdete Person befindet. Elektrische Anlagen verfügen in aller Regel auch über passiven Schutz, beispielsweise in Form von Abdeckungen, Gehäusen, Verbauten und Schränken. Tritt ein (Stör)lichtbogen in einem solchen geschützten Bereich auf, so besteht für eine Person außerhalb dieses Bereichs in der Regel auch dann keine schwerwiegende Gefährdung, wenn der Lichtbogen nicht oder nicht sofort ausgeschaltet wird. Durch die oben vorgeschlagenen Maßnahmen wird nun sichergestellt, dass die optische Auslöseeinrichtung einen Schutzschalter in einem gesicherten Bereich nur dann auslöst, wenn der auftretende Lichtbogen auch tatsächlich eine Gefahr für jemanden darstellt. Beispielsweise ist ein Schaltlichtbogen innerhalb eines geschlossenen Schaltschranks oder in ausreichender Entfernung an sich harmlos, befindet sich die Person aber beispielsweise mit dem Kopf in direkter Umgebung des Lichtbogens, so können daraus ernste gesundheitliche Konsequenzen resultieren. Die optische Erkennung eines Lichtbogens als solche ist an sich bekannt und kann beispielsweise auf der Intensität und/oder der Spektralverteilung des empfangenen Lichts basieren.

Besonders vorteilhaft ist es, wenn die Detektionseinrichtung als drahtloser Detektions-Empfänger ausgebildet oder mit einem drahtlosen Detektions-Empfänger verbunden und dazu ausgebildet ist, die optische Auslöseeinrichtung als anwesend in einem Gefahrenbereich zu erkennen, wenn ein von der optischen Auslöseeinrichtung verursachtes Sendesignal eine über einem Feldstärke-Schwellwert liegende Empfangsfeldstärke im Detektions-Empfänger hervorruft. Dementsprechend wird der Schutzschalter nur dann durch die optische Auslöseeinrichtung ausgeschaltet beziehungsweise ausgelöst, wenn die optische Auslöseeinrichtung als anwesend in einem Gefahrenbereich erkannt wird, das heißt wenn ein von der optischen Auslöseeinrichtung verursachtes Sendesignal eine über einem Feldstärke-Schwellwert liegende Empfangsfeldstärke im Detektions-Empfänger hervorruft. Der Gefahrenbereich, in dem sich die optischen Auslöseeinrichtung befinden muss, um den Schutzschalter auslösen zu können, muss nicht notwendigerweise mit dem Empfangsbereich eines mit dem Schalteingang des Schutzschalters gekoppelten drahtlosen Empfängers übereinstimmen. Für eine korrekte Funktion ist es zwar notwendig, dass der genannte Empfangsbereich des mit dem Schutzschalter gekoppelten Empfängers den Gefahrenbereich abdeckt, er kann aber auch darüber hinausgehen.

Insbesondere kann die elektrische Anlage so ausgebildet sein, dass
- der Schutzschalter einen Schalteingang zum Auslösen beziehungsweise Ausschalten des Schutzschalters aufweist,
- die zumindest eine optische Auslöseeinrichtung einen Steuerausgang aufweist, welcher mit dem Schalteingang des Schutzschalters (wirk)verbunden ist und
- die zumindest eine optische Auslöseeinrichtung dazu ausgebildet ist, den Zustand des Steuerausgangs bei Erkennung eines Lichtbogens zu ändern und in Folge den Schutzschalter auszulösen beziehungsweise auszuschalten.

Die elektrische Anlage umfasst dann
- einen Schaltschrank,
- einen im Schaltschrank angeordneten Schutzschalter, welcher einen Schalteingang zum Auslösen beziehungsweise Ausschalten des Schutzschalters aufweist, sowie
- zumindest eine optische Auslöseeinrichtung zur Erkennung eines Lichtbogens,
wobei
- die zumindest eine optische Auslöseeinrichtung einen Steuerausgang aufweist, welcher mit dem Schalteingang des Schutzschalters verbunden ist,
- die zumindest eine optische Auslöseeinrichtung dazu ausgebildet ist, den Zustand des Steuerausgangs bei Erkennung eines Lichtbogens zu ändern und in Folge den Schutzschalter auszulösen beziehungsweise auszuschalten und wobei
- die elektrische Anlage eine Detektionseinrichtung zur Erkennung eines Zutritts zu einem gesicherten Bereich der elektrischen Anlage umfasst und
- eine elektronische Schaltung, welche mit der Detektionseinrichtung verbunden ist und eine Auslösung beziehungsweise ein Ausschalten des Schutzschalters durch die zumindest eine optische Auslöseeinrichtung bei Erkennung eines Zutritts ermöglicht und andernfalls verhindert.

Demgemäß ist ein Verfahren zur Sicherung einer elektrischen Anlage von Vorteil, welche einen Schaltschrank umfasst, sowie einen im Schaltschrank angeordneten Schutzschalter, welcher einen Schalteingang zum Auslösen beziehungsweise Ausschalten des Schutzschalters aufweist, sowie zumindest eine optische Auslöseeinrichtung zur Erkennung eines Lichtbogens
wobei
- die zumindest eine optische Auslöseeinrichtung der elektrischen Anlage ein in der elektrischen Anlage (insbesondere im Schaltschrank) emittiertes Licht erfasst,
- die zumindest eine optische Auslöseeinrichtung einen Zustand eines Steuerausgang der zumindest einen optischen Auslöseeinrichtung ändert, wenn das Auftreten eines (Stör)Lichtbogens erkannt wird und
der mit dem Schalteingang des Schutzschalters verbundene Steuerausgang den Schutzschalter bei Erkennung eines (Stör)Lichtbogens auslöst beziehungsweise ausschaltet und wobei
- eine Detektionseinrichtung der elektrischen Anlage einen Zutritt zu einem gesicherten Bereich der elektrischen Anlage erkennt und
- eine mit der Detektionseinrichtunge verbundene elektronische Schaltung , eine Auslösung beziehungsweise ein Ausschalten des Schutzschalters durch die zumindest eine optische Auslöseeinrichtung bei Erkennung eines Zutritts ermöglicht und andernfalls verhindert.

Der Vollständigkeit halber wird angemerkt, dass der Begriff "Zutritt" im Rahmen der Erfindung gleichbedeutend mit dem Begriff "Zugriff" ist. Das heißt, ein Gehen ist für den Zutritt zu einem gesicherten Bereich der elektrischen Anlage zwar möglich, streng genommen aber nicht notwendig.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft kann
a) die zumindest eine optische Auslöseeinrichtung für die Befestigung am menschlichen Körper ausgebildet sein, oder
b) die zumindest eine optische Auslöseeinrichtung ist im Schaltschrank oder außen am Schaltschrank angeordnet, oder
c) eine erste optische Auslöseeinrichtung ist für die Befestigung am menschlichen Körper ausgebildet, und eine zweite optische Auslöseeinrichtung ist im Schaltschrank oder außen am Schaltschrank angeordnet.

In den Fällen a) und c) kann die zumindest eine (erste) optische Auslöseeinrichtung insbesondere auf einem Helm, einer Armbinde und/oder auf einem Bekleidungsstück angeordnet sein, im Speziellen auf einer Jacke. Die optische Auslöseeinrichtung kann dabei beispielsweise fix auf dem Helm der Armbinde und/oder auf dem Bekleidungsstück angeordnet sein, oder sie kann bei Bedarf etwa mit einer Klammer oder einem Klett-Streifen temporär an den genannten Gegenständen montiert werden. Im Fall b) kann die (zweite) optische Auslöseeinrichtung ebenfalls eine Klammer aufweisen, oder beispielsweise einen Magneten, mit dem die optische Auslöseeinrichtung an metallischen Bauteilen befestigt werden kann.

Günstig ist es, wenn die elektronische Schaltung als logische UND-Verknüpfung eines positiven Lichtbogensignals der optischen Auslöseeinrichtung und eines Zutritts-Signals der Detektionseinrichtung ausgebildet ist oder als solche wirkt und ausgangsseitig mit dem Schutzschalter wirkverbunden ist. Die UND-Verknüpfung ist also logisch zwischen dem Schutzschalter und der optischen Auslöseeinrichtung eingefügt. Dementsprechend werden ein positives Lichtbogensignal der optischen Auslöseeinrichtung und ein Zutritts-Signals der Detektionseinrichtung logisch UND-verknüpft, und der Schutzschalter wird nur dann durch die optische Auslöseeinrichtung ausgeschaltet beziehungsweise ausgelöst, wenn ein Zutritt zu der elektrischen Anlage erkannt wird.

Günstig ist es weiterhin, wenn die elektrische Anlage
- eine Betriebsstrom-Messeinrichtung zur Messung eines durch den Schutzschalter oder durch die elektrische Anlage fließenden Stroms aufweist sowie,
- eine elektronische Schaltung, welche mit der Betriebsstrom-Messeinrichtung verbunden ist und eine Auslösung beziehungsweise ein Ausschalten des Schutzschalters durch die optische Auslöseeinrichtung nur bei Überschreitung eines Betriebsstrom-Schwellwerts durch den gemessenen Betriebsstrom und/oder bei Überschreitung eines Anstiegs-Schwellwerts einer zeitlichen Ableitung des gemessenen Betriebsstroms ermöglicht.

Demgemäß ist es von Vorteil, wenn der Schutzschalter durch die zumindest eine optische Auslöseeinrichtung nur dann ausgelöst beziehungsweise ausgeschaltet wird, wenn ein gemessener Strom durch den Schutzschalter oder durch die elektrische Anlage einen Betriebsstrom-Schwellwert überschreitet und/oder die zeitliche Ableitung des gemessenen Betriebsstroms einen Anstiegs-Schwellwert überschreitet.

Bei dieser Variante der elektrischen Anlage wird also ein zweites Kriterium für die Klassifizierung eines Ereignisses als Lichtbogen herangezogen. Konkret wird nicht nur das vom Lichtbogen ausgehende Licht ausgewertet (nämlich durch die optische Auslöseeinrichtung), sondern auch der durch einen Schutzschalter oder durch die elektrische Anlage fließende Strom. Ein Fotoblitz beispielsweise kann demzufolge kein Ausschalten des Schutzschalters bewirken, da ja damit kein Stromanstieg durch die elektrische Anlage einhergeht. Die Wahrscheinlichkeit einer Fehlauslösung wird damit deutlich verringert.

Günstig ist es weiterhin, wenn der Schutzschalter als Leitungsschutzschalter, als Lichtbogen-Kurzschluss-Schalter oder als kombinierter Leitungs- und Lichtbogen-Kurzschluss-Schalter ausgebildet ist. Diese Schalter sind in einer elektrischen Anlage oft ohnehin bereits für andere Zwecke vorhanden und werden von dem vorgeschlagenen System mitverwendet, wodurch sich ein Doppelnutzen ergibt. "Leitungsschutzschalter" dienen generell dazu, einen Stromkreis bei Erkennung einer Überlast zu trennen. Überlast liegt in der Regel bei Überstrom vor, insbesondere in Zusammenhang mit einem bestimmten Stromanstieg, und/oder bei Übertemperatur, das heißt bei thermischer Überlast. "Lichtbogen-Kurzschluss-Schalter" dienen dazu, zwei oder mehr Leiter auf unterschiedlichem Spannungspotential (zum Beispiel die Phasen und gegebenenfalls einen Nullleiter) kurzzuschließen, um damit einen brennenden Lichtbogen zu löschen. Lichtbogen-Kurzschluss-Schalter werden in aller Regel in Kombination mit einem stromaufwärts liegenden Leitungsschutzschalter angewandt, wodurch eine Schalter-Kaskade entsteht. Wird der Lichtbogen-Kurzschluss-Schalter geschlossen, treten in der Regel so hohe Kurzschlussströme auf, die in Folge zu einer Ausschaltung beziehungsweise Auslösung des Leitungsschutzschalters führen. Die beiden Schalter können generell auch als kombinierter Leitungs- und Lichtbogen-Kurzschluss-Schalter ausgeführt sein. Dabei kann die bereits oben genannte Schaltkaskade wirksam sein, oder die beiden Schalter können im Gefahrenfall auch simultan betätigt werden. Eine Wirkverbindung zur optischen Auslöseeinrichtung kann nun an einem Leitungsschutzschalter ansetzen und direkt diesen ausschalten/auslösen, oder die Wirkverbindung kann auch am Lichtbogen-Kurzschluss-Schalter ansetzen und diesen bei Gefahr schließen. Der solcherart "simulierte" Lichtbogen führt in Folge wieder zur Auslösung eines stromaufwärts liegenden Leitungsschutzschalters, wenn dieser nicht ohnehin simultan mit dem Lichtbogen-Kurzschluss-Schalter geschaltet wird (wenn z.B. ein kombinierter Leitungs- und Lichtbogen-Kurzschluss-Schalter verwendet wird). Die optische Auslöseeinrichtung kann somit mit einem Störlichbogen-Schutzsystem wirkverbunden sein.

Insbesondere kann vorgesehen sein, dass
- der Steuerausgang der optischen Auslöseeinrichtung als drahtloser Sender ausgebildet ist oder mit einem drahtlosen Sender verbunden ist,
- der Schalteingang des Schutzschalters als drahtloser Empfänger ausgebildet ist oder mit einem drahtlosen Empfänger verbunden ist und
- der drahtloser Sender und der drahtloser Empfänger zum Aufbau einer drahtlosen (Wirk)Verbindung ausgebildet sind. Die drahtlose Variante bietet besonders viel Komfort für die in einer elektrischen Anlage anwesende Person, da sich diese wegen der drahtlosen Wirkverbindung frei in dem gesicherten Bereich bewegen kann. In Frage kommen dabei sowohl Funkverbindungen als auch optische Wirkverbindungen. Grundsätzlich ist auch möglich, dass der Steuerausgang der optischen Auslöseeinrichtung elektrisch beziehungsweise drahtgebunden mit dem Schalteingang des Schutzschalters (wirk)verbunden ist. Diese Variante schränkt die Bewegungsfreiheit der im gesicherten Bereich anwesenden Person etwas ein, ist dafür aber besonders (stör)sicher.

Besonders vorteilhaft ist es auch, wenn
- die elektrische Anlage d) zwei Messelektroden mit einer dazwischen angeordneten Spannungs-Messeinrichtung zur Messung der zwischen den Messelektroden liegenden Spannung und/oder e) zwei Messelektroden mit einer dazwischen angeordneten Strom-Messeinrichtung zur Messung des zwischen den Messelektroden fließenden Stroms und/oder f) ein Bekleidungsstück mit elektrischen Leitern und eine Strom-Messeinrichtung zur Messung des über die genannten elektrischen Leiter fließenden Stroms umfasst,
- die Spannungs-Messeinrichtung / Strom-Messeinrichtung mit dem Schutzschalter wirkverbunden ist und
- die Spannungs-Messeinrichtung / Strom-Messeinrichtung dazu ausgebildet ist, den Schutzschalter bei Erkennung eines über einem Schwellwert liegenden Messwerts auszulösen beziehungsweise auszuschalten.

Dementsprechend ist es auch von Vorteil, wenn
- d) eine zwischen zwei Messelektroden angeordnete und mit dem Schutzschalter wirkverbundene Spannungs-Messeinrichtung der elektrischen Anlage die zwischen den Messelektroden liegende Spannung ermittelt und/oder e) eine zwischen zwei Messelektroden angeordnete und mit dem Schutzschalter wirkverbundene Strom-Messeinrichtung der elektrischen Anlage den zwischen den Messelektroden fließenden Strom ermittelt und/oder f) eine mit dem Schutzschalter wirkverbundene Strom-Messeinrichtung der elektrischen Anlage den über elektrische Leiter eines Bekleidungsstücks fließenden Strom ermittelt und
- die Spannungs-Messeinrichtung / Strom-Messeinrichtung den Schutzschalter auslöst beziehungsweise ausschaltet, wenn ein über einem Schwellwert liegender Messwert erkannt wird.

Insbesondere kann die elektrische Anlage so ausgebildet sein, dass
- der Schutzschalter einen Schalteingang zum Auslösen beziehungsweise Ausschalten des Schutzschalters aufweist,
- die Spannungs-Messeinrichtung / Strom-Messeinrichtung einen Steuerausgang aufweist, welcher mit dem Schalteingang des Schutzschalters (wirk)verbunden ist und
- die Spannungs-Messeinrichtung / Strom-Messeinrichtung dazu ausgebildet ist, den Zustand des Steuerausgangs bei Erkennung eines über einem Schwellwert liegenden Messwerts zu ändern und in Folge den Schutzschalter auszulösen beziehungsweise auszuschalten.

Eine Gefahr für eine Person kann nicht nur von einem in der elektrischen Anlage auftretenden (Stör)lichtbogen ausgehen, sondern beispielsweise auch von einem zu hohen Fehlerstrom über eine fehlerhafte Isolation. Durch die oben vorgeschlagenen Maßnahmen wird eine Person nicht nur vor einem Lichtbogen geschützt, sondern auch vor den schädlichen Auswirkungen eines zu hohen Fehlerstroms. Konkret kann sichergestellt werden, dass der zu einer Abschaltung respektive Auslösung eines Schutzschalters herangezogene Fehlerstrom keine gesundheitliche Gefahr für eine in beziehungsweise an der elektrischen Anlage befindliche Person darstellt. Insbesondere kann dieser Abschaltung ein anderer (im Speziellen ein niedrigerer) Fehlerstrom zugrunde gelegt werden als ein Fehlerstrom, der im Normalbetrieb der elektrischen Anlage ohne Anwesenheit einer Person zugelassen wird.

Der Fehlerstrom wird im Fall d) durch Messen der zwischen den Messelektroden liegenden Spannung ermittelt. Der Fehlerstrom fließt dabei über die in der elektrischen Anlage befindliche Person, beispielsweise über deren Arm, und verursacht wegen des Widerstands des menschlichen Körpers (zirka 800 Ohm) einen Spannungsabfall zwischen den Messelektroden. Überschreitet der Messwert, also die gemessene Spannung, einen bestimmten Schwellwert, welcher einer Gefährdung des Menschen durch den entsprechenden Fehlerstrom zugeordnet ist, so wird der Stromkreis, von welchem die Gefährdung ausgeht, von einer Versorgungsspannung getrennt.

Im Fall e) sind die Messelektroden elektrisch miteinander verbunden, vorzugsweise mit Hilfe eines elektrischen Leiters, dessen Widerstand niedriger ist als der des menschlichen Körpers. Der Fehlerstrom fließt dann zumindest zwischen den beiden Messelektroden hauptsächlich durch den elektrischen Leiter, wodurch die in der elektrischen Anlage befindliche Person geschont wird.

Die Strom-Messeinrichtung kann einen mit den Messelektroden elektrisch verbundenen Strom-Messwiderstand aufweisen oder auch einen Durchsteckwandler, welcher gegebenenfalls auch als Strom-Messzange ausgebildet sein kann. Bei ersterem wird der Fehlerstrom über die am Strom-Messwiderstand abfallende elektrische Spannung ermittelt. Im Grunde weist die elektrische Anlage in diesem Fall somit eine Spannungs-Messeinrichtung auf. Die Grenzen zwischen Spannungs-Messeinrichtung und Strom-Messeinrichtung sind daher fließend. Beim Durchsteckwandler wird dagegen ein elektromagnetisches Feld ermittelt, das durch den zwischen den Messelektroden fließenden Strom verursacht wird. Die Verbindung zwischen den beiden Messelektroden kann bei dieser Messmethode besonders niederohmig ausgeführt werden.

Im Fall f) weist ein Bekleidungsstück, welches die in der elektrischen Anlage befindliche Person trägt, elektrische Leiter auf. Beispielsweise kann das Bekleidungsstück als Handschuh, Jacke, Overall, Hose oder Schutzanzug ausgebildet sein, und die elektrischen Leiter können durch elektrisch leitende Drähte, ein elektrisch leitendes Geflecht und/oder durch eine elektrisch leitende Folie gebildet sein, insbesondere durch metallische Drähte, ein metallisches Geflecht und/oder durch eine metallische Folie oder auch durch Kohlenstoff-Drähte, ein Kohlenstoff-Draht-Geflecht und/oder durch eine Kohlenstoff-Folie. Die elektrischen Leiter sind in das Bekleidungsstück eingearbeitet und berühren die Haut der in der elektrischen Anlage befindlichen Person vorzugsweise nicht. Beispielsweise liegt zwischen der Haut und den Leitern eine Schicht aus Baumwollgewebe oder eines anderen elektrisch isolierenden Stoffs. Wenngleich eine Isolation zwischen den elektrischen Leitern und der Person vorteilhaft ist, so können die elektrischen Leiter nichts desto trotz auch auf der Haut der in der elektrischen Anlage befindlichen Person aufliegen.

Wie im Fall e) fließt der Fehlerstrom hauptsächlich durch die elektrischen Leiter und nur in geringem Maße über die in der elektrischen Anlage befindlichen Person, wodurch diese wiederum geschont wird. Die Strommessung selbst kann wiederum mit Hilfe eines Strom-Messwiderstands erfolgen, der mit den elektrischen Leitern des Bekleidungsstücks verbunden ist, oder mit Hilfe eines Durchsteckwandlers, welcher ein elektromagnetisches Feld misst, das durch einen durch die elektrischen Leiter des Bekleidungsstücks fließenden Strom hervorgerufen ist.

Die zu den Fällen d) bis f) vorgeschlagenen Maßnahmen können in einer elektrischen Anlage einzeln oder in Kombination angewandt werden. Besonders vorteilhaft ist es dabei, wenn die Fälle d) und f) kombiniert werden oder die Fälle e) und f). Generell sollten die in einer elektrischen Anlage befindlichen Personen nämlich Schutzkleidung tragen, die wie im Fall f) ausgeführt, mit elektrischen Leitern ausgestattet sein kann. Berührt die Person leitende Teile der elektrischen Anlage, so fließt ein Fehlerstrom, wie oben erläutert, im Wesentlichen über die elektrischen Leiter der Schutzbekleidung und nur zu einem geringen Teil über den Körper der in der elektrischen Anlage befindlichen Person, wodurch diese geschont wird. Entgegen der Empfehlungen oder auch Vorschriften der Betreiber der elektrischen Anlagen wird die Schutzbekleidung jedoch zeitweise nicht getragen. Beispielsweise werden Schutzhandschuhe ausgezogen, wenn Arbeiten durchgeführt werden müssen, die mit Handschuhen nur schwer erledigt werden können, etwa Einstellarbeiten oder das Einschrauben von Schrauben. Berührt der Arbeiter nun elektrische leitende Teile der elektrischen Anlage, so kann der Fehlerstrom nicht über die (nicht getragene) Schutzkleidung abfließen, sondern fließt über den Körper des Arbeiters. Vorteilhaft greifen nun die in den Fällen d) oder e) vorgeschlagenen Maßnahmen, wodurch es ebenfalls zu einer Abschaltung des Stromkreises kommt, von welchem die Gefährdung ausgeht. Die elektrische Anlage ist somit besonders sicher.

Je nachdem, ob eine Spannungs-Messeinrichtung oder eine Strom-Messeinrichtung eingesetzt wird, ist der für die Auslösung beziehungsweise Ausschaltung des Schutzschalters vorgesehene Schwellwert ein Spannungs- Schwellwert (wenn eine Spannungs-Messeinrichtung eingesetzt wird) oder ein Strom-Schwellwert (wenn eine Strom-Messeinrichtung eingesetzt wird). Im Rahmen der Offenbarung wird vereinfacht der Begriff "Schwellwert" verwendet, der je nach Anwendungsfall gedanklich durch den Begriff "Spannungs-Schwellwert" oder "Strom-Schwellwert" ersetzt werden kann.

Besonders vorteilhaft ist es, wenn die Spannungs-Messeinrichtung / Strom-Messeinrichtung und die optische Auslöseeinrichtung mit demselben Schutzschalter wirkverbunden sind. Der Vorteil der vorgeschlagenen Maßnahmen tritt dann besonders zu Tage, beziehungsweise ergibt sich ein besonderer synergetischer Nutzen, da ein Schutzschalter für die Gefahrenabwendung zweier unterschiedlicher Störfälle eingesetzt werden kann. Darüber hinaus darf nicht vergessen werden, dass der Schutzschalter, wie eingangs erwähnt, oft ohnehin bereits in einer elektrischen Anlage vorhanden ist, und dort beispielsweise bei einem Überstrom ausschaltet (Leitungsschutzschalter).

Grundsätzlich könnte die optische Auslöseeinrichtung auch mit einem anderen Schutzschalter wirkverbunden sein als die Spannungs-Messeinrichtung / Strom-Messeinrichtung. Insbesondere kommen dabei wieder Leitungsschutzschalter, Lichtbogen-Kurzschluss-Schalter oder kombinierter Leitungs- und Lichtbogen-Kurzschluss-Schalter in Frage. Denkbar ist auch, dass die Spannungs-Messeinrichtung / Strom-Messeinrichtung mit einer ersten Gruppe von Schutzschaltern wirkverbunden ist und die optische Auslöseeinrichtung mit einer zweiten Gruppe von Schutzschaltern. Die beiden Gruppen können im Speziellen auch eine Schnittmenge aufweisen. Vorteilhaft ist es, wenn die Messelektroden in den Fällen d) und e) für die Befestigung am menschlichen Körper ausgebildet sind, insbesondere auf der Haut des menschlichen Körpers. Dementsprechend werden die Messelektroden für die Durchführung des offenbarten Verfahrens am menschlichen Körper befestigt, insbesondere auf der Haut des menschlichen Körpers, und es wird im Fall d) die am besagten Körper zwischen den Messelektroden abfallende Spannung ermittelt oder im Fall e) der zwischen den Messelektroden fließende Strom. Greift eine Person (unbeabsichtigt) auf Teile der elektrischen Anlage, die eine gefährliche Spannung führen, so fließt über den menschlichen Körper, und insbesondere über den greifenden Arm, ein elektrischer Strom, der durch den Widerstand des menschlichen Körpers (zirka 800 Ohm) einen Spannungsabfall zwischen den Messelektroden verursacht. Überschreitet der Messwert (also die gemessene Spannung oder der gemessene Strom) einen bestimmten Schwellwert, welcher einer Gefährdung des Menschen durch den entsprechenden Fehlerstrom zugeordnet ist, so wird der Stromkreis, von welchem die Gefährdung ausgeht, wie oben beschrieben von einer Versorgungsspannung getrennt.

Besonders vorteilhaft ist es dabei, wenn je eine Elektrode auf je einer Armbinde/Beinbinde angeordnet ist oder wenn beide Messelektroden voneinander beabstandet auf einer einzigen Armbinde/Beinbinde angeordnet sind. Ersteres bietet den Vorteil besserer Beweglichkeit, zweiteres führt zu einer bekannten Beabstandung der Elektroden am menschlichen Körper. Selbstverständlich kann die elektrische Anlage auch mehrere Elektrodenpaare aufweisen, sodass zum Beispiel ein Arbeiter mit mehreren Messelektroden ausgestattet werden kann, oder sodass mehrere Arbeiter mit Messelektroden ausgestattet werden können.

Damit an dem besagten menschlichen Körper keine gefährlichen Spannungspotentiale entstehen können, ist es von Vorteil, wenn eine der beiden Messelektroden in den Fällen d) und e) mit einem Erdungspotential verbunden wird oder der besagte menschliche Körper mit Hilfe einer Erdungselektrode mit einem Erdungspotential verbunden wird und/oder im Fall f) die elektrischen Leiter des Bekleidungsstücks mit einem Erdungspotential verbunden werden. Dementsprechend ist es auch von Vorteil, wenn eine der beiden Messelektroden in den Fällen d) und e) mit einem Erdungspotential verbunden ist oder die elektrische Anlage eine mit einem Erdungspotential verbundene Erdungselektrode aufweist, welche für die Befestigung am menschlichen Körper ausgebildet ist, insbesondere auf der Haut des menschlichen Körpers, und/oder im Fall f) die elektrischen Leiter des Bekleidungsstücks mit einem Erdungspotential verbunden sind. Die Erdungselektrode kann im Speziellen wiederum auf einer Armbinde oder einer Beinbinde angeordnet sein.

Generell ist es von Vorteil, wenn die Messelektroden und/oder die Erdungselektrode an der Innenseite eines Bekleidungsstücks angeordnet sind, insbesondere an einer Jacke, einer Hose, einem Schuh und/oder an einem Handschuh. Auf diese Weise werden einerseits der Arbeiter aber auch die Messelektroden gut geschützt. Im Bereich der Messelektroden und/oder der Erdungselektrode können außen an dem betreffenden Kleidungsstück Spannbändchen angebracht sein, sodass die Messelektroden und/oder die Erdungselektrode fest auf die Haut des menschlichen Körpers aufgedrückt werden können. Solcherart entsteht wiederum eine Art Arm- oder Beinbinde. Die Messelektroden, die Binden, die elektrischen Leiter sowie die Spannungs-Messeinrichtung und die Strom-Messeinrichtung können insbesondere Teil desselben Kleidungsstücks sein.

Günstig ist es schließlich, wenn der Schaltschrank für einen Betriebsstrom von zumindest 250 Ampere und/oder für eine Betriebsspannung von maximal 1000 VAC oder 1500 VDC ausgelegt ist. Diese Bereiche kennzeichnen Hochstrom-Anlagen beziehungsweise Niederspannungsanlagen. Für diese Art von elektrischen Anlagen eignet sich die vorgestellte Anordnung besonders gut.

An dieser Stelle wird angemerkt, dass sich die zur elektrischen Anlage offenbarten Varianten und die daraus resultierenden Vorteile gleichermaßen auf das Betriebsverfahren für die elektrische Anlage beziehen und umgekehrt.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung einer beispielhaften elektrischen Anlage mit optischen Auslöseeinrichtungen, die mit einem Schutzschalter wirkverbunden sind;
- Fig. 2: eine beispielhafte Schaltkaskade mit mehreren Lichtbogen-Kurzschluss-Schaltern und übergeordneten Leitungsschutzschaltern;
- Fig. 3: eine schematische Darstellung einer beispielhaften elektrischen Anlage mit einer Spannungs-Messeinrichtung, die mit einem Schutzschalter wirkverbunden ist;
- Fig. 4: eine Variante, bei der die Messelektroden mit einem Strom-Messwiderstand elektrisch miteinander verbunden sind;
- Fig. 5: eine Variante, bei der die Messelektroden elektrisch miteinander verbunden sind und der zwischen den Messelektroden fließende Strom mit einem Durchsteckwandler ermittelt wird;
- Fig. 6: ein Beispiel für ein Bekleidungsstück mit elektrischen Leitern und einem Durchsteckwandler zur Ermittlung des über die genannten Leiter fließenden Stroms;
- Fig. 7: wie Fig. 6, nur mit einem elektrisch leitfähigen Geflecht;
- Fig. 8: ein Beispiel für ein Bekleidungsstück mit elektrischen Leitern und einem Strom-Messwiderstand zur Ermittlung des über die genannten Leiter fließenden Stroms und
- Fig. 9: ein weiteres Beispiel für ein Bekleidungsstück mit elektrischen Leitern und einem Durchsteckwandler zur Ermittlung des über die genannten Leiter fließenden Stroms.

### DETAILIERTE BESCHREIBUNG DER ERFINDUNG

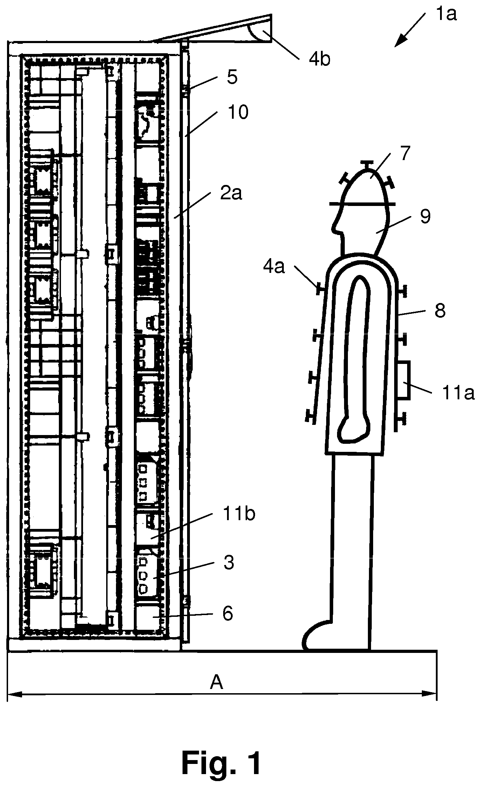

Die Fig. 1 zeigt eine elektrische Anlage 1a, umfassend einen Schaltschrank 2a und einen im Schaltschrank 2a angeordneten Schutzschalter 3. Der Schaltschrank 2a kann insbesondere für einen Betriebsstrom von zumindest 250 Ampere und/oder für eine Betriebsspannung von maximal 1000 VAC oder 1500 VDC ausgelegt sein. Weiterhin weist die elektrische Anlage 1a mehrere mit dem Schutzschalter 3 wirkverbundene optische Auslöseeinrichtungen 4a, 4b auf, welche dazu ausgebildet sind, den Schutzschalter 3 bei Erkennung eines Lichtbogens auszulösen beziehungsweise auszuschalten

Zusätzlich weist die elektrische Anlage 1a eine Detektionseinrichtung 5 zur Erkennung eines Zutritts zu einem gesicherten Bereich der elektrischen Anlage 1a auf, sowie eine elektronische Schaltung 6, welche mit der Detektionseinrichtung 5 verbunden ist und eine Auslösung beziehungsweise ein Ausschalten des Schutzschalters 3 durch die optischen Auslöseeinrichtungen 4a, 4b bei Erkennung eines Zutritts ermöglicht und andernfalls verhindert.

Der Schutzschalter 3 kann dazu einen Schalteingang zum Auslösen beziehungsweise Ausschalten des Schutzschalters 3 aufweisen. Die optische Auslöseeinrichtung 4a, 4b kann einen Steuerausgang aufweisen, welcher mit dem Schalteingang des Schutzschalters 3 (wirk)verbunden ist. Bei Erkennung eines Lichtbogens ändert die optische Auslöseeinrichtung 4a, 4b den Zustand des Steuerausgangs und löst in Folge den Schutzschalter 3 aus.

In dem vorliegenden Beispiel sind mehrere erste optische Auslöseeinrichtungen 4a für die Befestigung am menschlichen Körper ausgebildet, und eine zweite optische Auslöseeinrichtung 4b ist außen am Schaltschrank 2a angeordnet. Die ersten optischen Auslöseeinrichtungen 4a können, wie in der Fig. 1 dargestellt, auf einem Helm 7, einer Armbinde und/oder auf einem Bekleidungsstück 8 angeordnet sein und von einer Person 9 getragen werden. Im vorliegenden Beispiel ist als Bekleidungsstück eine spezielle Schutzweste 8 vorgesehen, denkbar ist aber auch, dass die ersten optische Auslöseeinrichtungen 4a auf einer Jacke oder einer Hose angeordnet sind. Zudem ist in der Fig. 1 eine Schaltschranktür 10 dargestellt, die in dem gezeigten Beispiel vollständig geöffnet und daher nur von ihrer Schmalseite aus zu sehen ist.

Ein positives Lichtbogensignal der optischen Auslöseeinrichtungen 4a, 4b und ein Zutritts-Signals der Detektionseinrichtung 5 werden logisch UND-verknüpft. Die ausgangsseitig mit dem Schutzschalter 3 wirkverbundene elektronische Schaltung 6 kann demzufolge als logische UND-Verknüpfung ausgebildet sein oder zumindest als solche wirken. Die UND-Verknüpfung ist somit logisch zwischen dem Schutzschalter 3 und den optischen Auslöseeinrichtungen 4a, 4b eingefügt.

Durch die vorgeschlagenen Maßnahmen wird sichergestellt, dass die optischen Auslöseeinrichtungen 4a, 4b den Schutzschalter 3 nur dann auslösen, wenn von dem gesicherten Bereich auch tatsächlich eine Gefahr ausgeht. Geht dagegen keine Gefahr von dem gesicherten Bereich aus, so können die optischen Auslöseeinrichtungen 4a, 4b den Schutzschalter 3 nicht auslösen. Damit wird vermieden, dass sicherheitskritische Stromkreise wegen eines vermeintlichen Notfalls und ohne tatsächliche Gefahr für die Person 9 abgeschaltet werden.

Die Wirkverbindung zwischen dem Schutzschalter 3 und den optischen Auslöseeinrichtungen 4a, 4b ist drahtlos hergestellt. Dazu ist der Steuerausgang der optischen Auslöseeinrichtungen 4a in diesem Beispiel mit einem drahtlosen Sender 11a verbunden und der Schalteingang des Schutzschalters 3 mit einem drahtlosen Empfänger 11b. Der drahtlose Sender 11a und der drahtloser Empfänger 11b sind zum Aufbau einer drahtlosen (Wirk)Verbindung ausgebildet. In dem dargestellten Beispiel ist ein gesonderter Sender 11a und ein gesonderter Empfänger 11b vorgesehen. Denkbar wäre natürlich auch, dass der (die) Sender 11a in die optischen Auslöseeinrichtungen 4a und/oder der Empfänger 11b in den Schutzschalter 3 integriert ist.

In dem in Fig. 1 dargestellten Beispiel sind mehrere, auf der Person 9 rundum verteilte erste optische Auslöseeinrichtung 4a sowie eine zweite optische Auslöseeinrichtung 4b außen am Schaltschrank 2a angeordnet, welche auf das Innere des Schaltschranks 2a ausgerichtet ist. Denkbar wäre auch, dass die zweite Auslöseeinrichtung 4b innen im Schaltschrank 2a angeordnet ist oder auch, dass mehrere zweite Auslöseeinrichtungen 4b vorgesehen sind. Gleichermaßen ist vorstellbar, dass nur eine erste optische Auslöseeinrichtung 4a vorgesehen ist und beispielsweise auf dem Helm 7 angebracht ist, welche insbesondere in Blickrichtung der Person 9 ausgerichtet sein kann. Selbstverständlich kann das System auch für mehr als eine Person 9 ausgestaltet sein. Durch das Vorsehen von ersten und zweiten optischen Auslöseeinrichtungen 4a und 4b ist die Person 9 jedenfalls sehr gut vor einem auftretenden Lichtbogen geschützt.

Dennoch ist denkbar, dass nur erste optische Auslöseeinrichtungen 4a an der Person 9 angeordnet sind (und eine zweite optische Auslöseeinrichtung 4b am oder im Schaltschrank 2a fehlt), oder dass nur zumindest eine zweite optische Auslöseeinrichtung 4b am oder im Schaltschrank 2a angeordnet ist (und eine erste optische Auslöseeinrichtung 4a an der Person 9 fehlt). Das System ist dann einfacher aufgebaut und funktioniert in der bereits oben beschriebenen Weise.

Die Detektionseinrichtung 5 ist zur Erkennung der Anwesenheit der optischen Auslöseeinrichtungen 4a, 4b in einem Gefahrenbereich A der elektrischen Anlage 1a ausgebildet, und die mit der Detektionseinrichtung 5 verbundene elektronische Schaltung 6 ermöglicht eine Auslösung beziehungsweise ein Ausschalten des Schutzschalters 3 durch die optischen Auslöseeinrichtungen 4a, 4b, wenn die optischen Auslöseeinrichtungen 4a, 4b im Gefahrenbereich A anwesend sind, und andernfalls verhindert.

Zu diesem Zweck kann die Detektionseinrichtung 5 als drahtloser Detektions-Empfänger ausgebildet oder mit einem drahtlosen Detektions-Empfänger verbunden sein. Insbesondere kann die Detektionseinrichtung 5 mit dem drahtlosen Empfänger 11b verbunden oder durch diesen realisiert sein.

Die optischen Auslöseeinrichtungen 4a, 4b werden dann als anwesend in einem Gefahrenbereich A erkannt, wenn ein von den optischen Auslöseeinrichtungen 4a, 4b verursachtes Sendesignal eine über einem Feldstärke-Schwellwert liegende Empfangsfeldstärke im Detektions-Empfänger hervorruft. Der Gefahrenbereich A, in dem sich die optischen Auslöseeinrichtungen 4a, 4b befinden müssen, um den Schutzschalter 3 auslösen zu können muss nicht notwendigerweise mit dem Empfangsbereich des mit dem Schalteingang des Schutzschalters 3 gekoppelten drahtlosen Empfängers 11b übereinstimmen. Für eine korrekte Funktion ist es zwar notwendig, dass der genannte Empfangsbereich des Empfängers 11b den Gefahrenbereich A abdeckt, er kann aber auch darüber hinausgehen.

Der Schutzschalter 3 kann als Leitungsschutzschalter, als Lichtbogen-Kurzschluss-Schalter oder als kombinierter Leitungs- und Lichtbogen-Kurzschluss-Schalter ausgebildet sein. Diese Schalter sind in einer elektrischen Anlage 1a oft ohnehin bereits für andere Zwecke vorhanden und werden von dem vorgeschlagenen System mitverwendet, wodurch sich ein Doppelnutzen ergibt.

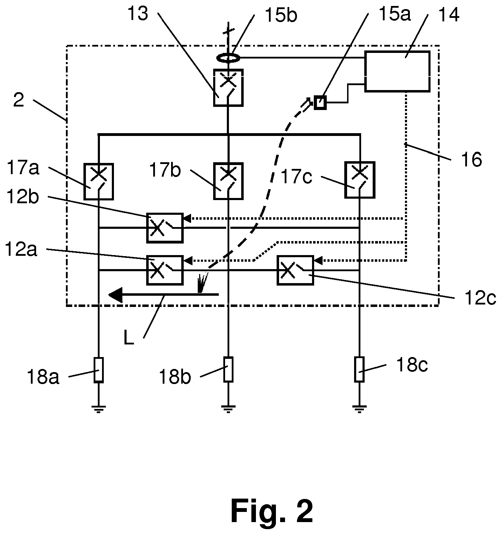

Fig. 2 zeigt dazu das Wirkprinzip einer Schalt-Kaskade, welche mehrere Lichtbogen-Kurzschluss-Schalter 12a..12c und einen übergeordneten Leitungsschutzschalter 13 aufweist. Fig. 2 zeigt weiterhin den rein symbolisch dargestellten beispielhaften Schaltschrank 2 mit einer Vorrichtung 14 zur Erkennung eines Lichtbogens, welche mit einem lichtempfindlichen Element 15a sowie einer Strom-Meßschleife 15b respektive einem Durchsteckwandler 15b verbunden ist. Zudem weist die genannte Vorrichtung 14 einen Schaltausgang 16 auf.

Zusätzlich zu dem übergeordneten Leitungsschutzschalter 13 sind optionale, je einer Phase eines Dreiphasensystems zugeordnete Leitungsschutzschalter 17a..17c vorgesehen. An den Schaltschrank 2 sind schließlich auch drei Verbraucher 18a..18c angeschlossen.

Die Funktionsweise der Schalt-Kaskade wird nun am Beispiel eines zwischen zwei Phasen brennenden Störlichtbogens L erläutert:
Mit Hilfe des lichtempfindlichen Elements 15a wird ein Überwachungsbereich auf das Auftreten eines Lichtbogens L überwacht. Wird ein Lichtbogen L detektiert, dann wird ein Schaltsignal über den Ausgang 16 ausgegeben, das an die Eingänge der Lichtbogen-Kurzschluss-Schalter 12a..12c geführt ist. In Folge des Schaltsignals werden die Lichtbogen-Kurzschluss-Schalter 12a..12c geschlossen und löschen damit den zwischen den Phasen brennenden Lichtbogen L. Der durch den Kurschluss hervorgerufene Überstrom löst in Folge den übergeordneten Leitungsschutzschalter 13 beziehungsweise die Leitungsschutzschalter 17a..17c aus, wodurch der betroffene Stromkreis letztlich vom Stromnetz getrennt wird.

Denkbar ist natürlich auch, dass der Leitungsschutzschalter 13 und/oder die Leitungsschutzschalter 17a..17c nicht über den Überstrom auslösen, sondern direkt über das Signal am Ausgang 16, der dann auch an die Eingänge des Leitungsschutzschalters 13 und/oder der Leitungsschutzschalter 17a..17c geführt ist.

Im vorliegenden Fall wird nicht nur das Signal des lichtempfindlichen Elements 15a für die Entscheidung darüber herangezogen, ob ein Lichtbogen L vorliegt oder nicht, sondern auch der von der Strom-Meßschleife 15b gemessene Strom. Gemäß diesem Verfahren liegt dann ein Lichtbogen L vor, wenn über das lichtempfindliche Element 15a grelles Licht gemessen wird UND wenn der von der Strom-Meßschleife 15b gemessene Betriebsstrom einen Betriebsstrom-Schwellwert überschreitet. Die Strom-Meßschleife 15b wirkt also als Betriebsstrom-Messeinrichtung 15b. Selbstverständlich können aber auch zusätzliche beziehungsweise andere Kriterien für die Bestimmung darüber herangezogen werden, ob ein Lichtbogen L vorliegt oder nicht.

Die optischen Auslöseeinrichtungen 4a, 4b der Fig. 1 können nun direkt mit dem Leitungsschutzschalter 13 / den Leitungsschutzschaltern 17a..17c wirkverbunden sein und diesen ansteuern. Die optischen Auslöseeinrichtungen 4a, 4b können aber auch mit den Lichtbogen-Kurzschluss-Schaltern 12a..12c wirkverbunden sein und diese ansteuern, sofern Lichtbogen-Kurzschluss-Schalter 12a..12c im Schaltschrank 2a verbaut sind. In diesem Fall können die Leitungsschutzschalter 13, 17a..17c indirekt durch die oben beschriebene Kaskade-Wirkung ausgelöst werden, oder die Leitungsschutzschalter 13, 17a..17c werden ebenfalls direkt von den optischen Auslöseeinrichtungen 4a, 4b angesteuert. Die optischen Auslöseeinrichtungen 4a, 4b können somit mit einem Störlichbogen-Schutzsystem wirkverbunden sein.

Die Erkennung eines Lichtbogens kann auch in der elektrischen Anlage 1a gemäß Fig. 1 rein optisch erfolgen, oder es ist eine Betriebsstrom-Messeinrichtung 15b zur Messung eines durch den Schutzschalter 3, 13, 17a..17b oder durch die elektrische Anlage 1a fließenden Stroms vorgesehen, sowie eine elektronische Schaltung 14, welche mit der Betriebsstrom-Messeinrichtung 15b verbunden ist und eine Auslösung beziehungsweise ein Ausschalten des Schutzschalters 3, 13, 17a..17b durch die optische Auslöseeinrichtung 4a, 4b nur bei Überschreitung eines Betriebsstrom-Schwellwerts durch den gemessenen Strom und/oder bei Überschreitung eines Anstiegs-Schwellwerts einer zeitlichen Ableitung des gemessenen Stroms ermöglicht.

In dem gezeigten Beispiel sind sowohl ein übergeordneter Leitungsschutzschalter 13 als auch je einer Phase eines Dreiphasensystems zugeordnete Leitungsschutzschalter 17a..17c vorgesehen. Bei gleicher oder vergleichbarer Funktion der Anordnung kann auch nur der übergeordneter Leitungsschutzschalter 13 vorgesehen sein oder nur die je einer Phase eines Dreiphasensystems zugeordnete Leitungsschutzschalter 17a..17c.

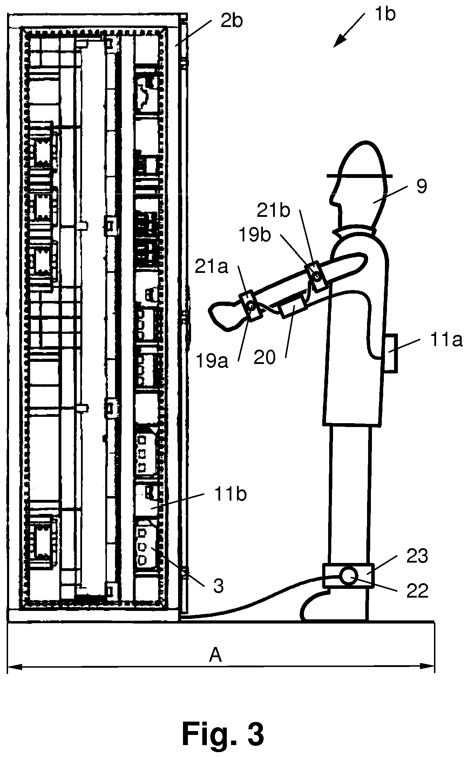

Fig. 3 zeigt nun ein weiteres Beispiel einer elektrischen Anlage 1b, welche einen Schaltschrank 2b und einen im Schaltschrank 2b angeordneten Schutzschalter 3 umfasst. Der Schaltschrank 2b kann wiederum für einen Betriebsstrom von zumindest 250 Ampere und/oder für eine Betriebsspannung von maximal 1000 VAC oder 1500 VDC ausgelegt sein. Weiterhin weist die elektrische Anlage 1b zwei Messelektroden 19a und 19b mit einer dazwischen angeordneten Spannungs-Messeinrichtung 20 zur Messung der zwischen den Messelektroden 19a, 19b liegenden Spannung auf. Die Spannungs-Messeinrichtung 20 ist mit dem Schutzschalter 3 wirkverbunden und dazu ausgebildet, den Schutzschalter 3 bei Erkennung einer über einem Schwellwert liegenden Überspannung auszulösen beziehungsweise auszuschalten (Fall d).

Der Schutzschalter 3 kann dazu einen Schalteingang zum Auslösen beziehungsweise Ausschalten des Schutzschalters 3 aufweisen. Die Spannungs-Messeinrichtung 20 kann einen Steuerausgang aufweisen, welcher mit dem Schalteingang des Schutzschalters 3 (wirk)verbunden ist. Bei Erkennung einer über einem Schwellwert liegenden Überspannung ändert die Messeinrichtung 20 den Zustand des Steuerausgangs und löst in Folge den Schutzschalter 3 aus.

Die beiden Messelektroden 19a, 19b sind für die Befestigung am menschlichen Körper ausgebildet, insbesondere auf der Haut des menschlichen Körpers. Konkret ist die erste Messelektrode 19a auf einer ersten Armbinde 21a angeordnet und die zweite Messelektrode 21b auf einer zweiten Armbinde 21b, welche von der Person 9 getragen werden. Grundsätzlich könnten auch beide Messelektroden 19a, 19b voneinander beabstandet auf einer einzigen Armbinde angeordnet sein. Alternativ könnten die Messelektroden 19a, 19b auch auf einer Beinbinde oder mehreren Beinbinden angeordnet sein. Zwei gesonderte Binden 19a, 19b bieten den Vorteil besserer Beweglichkeit, eine einzige Binde hat dagegen den Vorteil, dass der Elektrodenabstand vorgegeben und damit bekannt ist.

Damit an der Person 9 keine gefährlichen Spannungspotentiale entstehen können, ist es von Vorteil, wenn diese - wie in der Fig. 3 dargestellt - mit Hilfe einer Erdungselektrode 22 mit einem Erdungspotential verbunden ist. Die Erdungselektrode 22, ist wiederum für die Befestigung am menschlichen Körper ausgebildet, insbesondere auf der Haut des menschlichen Körpers, und im konkret dargestellten Fall an einer Beinbinde 23 angeordnet. Alternativ könnte die Erdungselektrode 22 auch auf einer Armbinde angeordnet sein, im Speziellen auf derselben Armbinde 21a, 21b wie die Messelektrode(n) 19a, 19b.

Generell wäre auch vorstellbar, dass die Messelektroden 19a, 19b und/oder die Erdungselektrode 22 an der Innenseite eines Bekleidungsstücks angeordnet sind, insbesondere an einer Jacke, einer Hose, einem Schuh und/oder an einem Handschuh. Auf diese Weise werden einerseits der Arbeiter 9 aber auch die Messelektroden 19a, 19b und die Erdungselektrode 22 gut geschützt. Im Bereich der Messelektroden 19a, 19b und/oder der Erdungselektrode 20 können außen an dem betreffenden Kleidungsstück Spannbändchen angebracht sein, sodass die Messelektroden 19a, 19b und/oder der Erdungselektrode 22 fest auf die Haut des menschlichen Körpers aufgedrückt werden können. Solcherart entsteht wiederum eine Art Arm- oder Beinbinde.

In dem dargestellten Beispiel ist die Wirkverbindung zwischen dem Schutzschalter 3 und der Spannungs-Messeinrichtung 20 drahtlos hergestellt. Dazu ist der Steuerausgang der Spannungs-Messeinrichtung 20 mit einem drahtlosen Sender 11a verbunden und der Schalteingang des Schutzschalters 3 mit einem drahtlosen Empfänger 11b. Der drahtlose Sender 11a und der drahtloser Empfänger 11b sind zum Aufbau einer drahtlosen (Wirk)Verbindung ausgebildet. In dem dargestellten Beispiel ist ein gesonderter Sender 11a und ein gesonderter Empfänger 11a vorgesehen. Denkbar wäre natürlich auch, dass der Sender 11a in die Spannungs-Messeinrichtung 20 und/oder der Empfänger 11b in den Schutzschalter 3 integriert ist.

Zwar bietet die drahtlose Variante, die beispielsweise optisch oder funkbasiert realisiert sein kann, viel Komfort und Bewegungsfreiheit für die Person 9, denkbar ist grundsätzlich aber auch, dass die Wirkverbindung zwischen der Spannungs-Messeinrichtung 20 und dem Schutzschalter 3 drahtgebunden hergestellt ist. Dazu kann der Steuerausgang der Spannungs-Messeinrichtung 20 mit Hilfe eines Kabels mit dem Schalteingang des Schutzschalters 3 verbunden sein. Diese Variante schränkt die Bewegungsfreiheit der im gesicherten Bereich anwesenden Person 9 zwar etwas ein, ist dafür aber besonders (stör)sicher.

Zur Durchführung des Betriebsverfahrens wird nun die zwischen den Messelektroden 19a, 19b abfallende Spannung ermittelt. Greift die Person 9 (unbeabsichtigt) auf Teile der elektrischen Anlage 1b, die eine gefährliche Spannung führen, so fließt über die Person 9, insbesondere über den greifenden Arm, ein elektrischer Strom, der durch den Widerstand des menschlichen Körpers (zirka 800 Ohm) einen Spannungsabfall zwischen den Messelektroden 19a, 19b verursacht. Überschreitet die gemessene Spannung beziehungsweise der dieser Spannung zugeordnete Fehlerstrom einen bestimmten Schwellwert, welcher eine Gefährdung für die Person 9 darstellt, so wird der Stromkreis, von welchem die Gefährdung ausgeht, durch den Schutzschalter 3 von einer Versorgungsspannung getrennt.

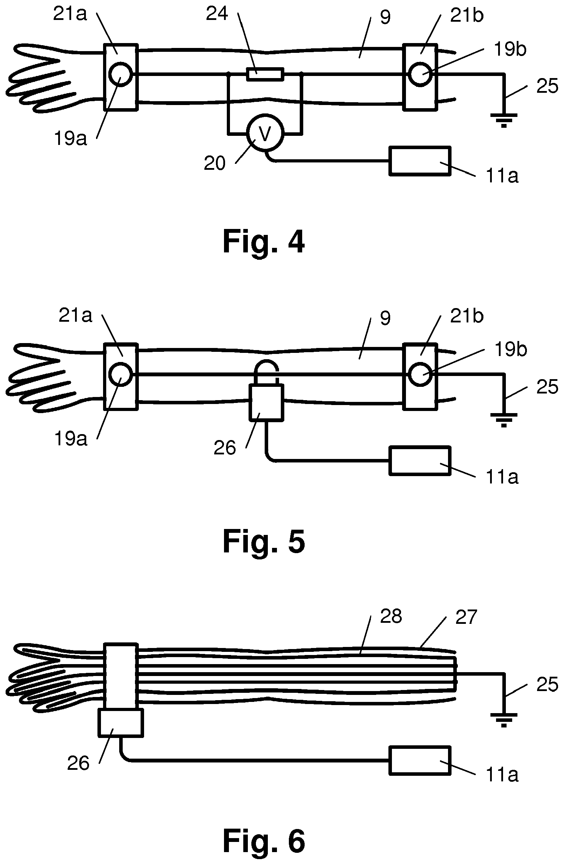

Fig. 4 zeigt nun eine Variante, bei der die Messelektroden 19a, 19b elektrisch miteinander verbunden sind, konkret mit einem Strom-Messwiderstand 24 (Fall e). Der Fehlerstrom wird dabei über die am Strom-Messwiderstand 24 abfallende elektrische Spannung ermittelt, welche mit der Spannungs-Messeinrichtung 20 gemessen wird. Die Spannungs-Messeinrichtung 20 ist wiederum mit dem drahtlosen Sender 11a verbunden und solcherart mit dem Schutzschalter 3 wirkverbunden. Vorzugsweise ist der elektrische Widerstand des Strom-Messwiderstands 24 niedriger als der des menschlichen Körpers. Der Fehlerstrom fließt dann zumindest zwischen den beiden Messelektroden 19a, 19b hauptsächlich durch den Strom-Messwiderstand 24 und nur in geringem Maße durch den Arm der in der elektrischen Anlage 1b befindlichen Person 9. In dem in Fig. 4 dargestellten Beispiel ist die zweite Messelektrode 19b direkt mit einem Erdpotential 25 verbunden, sodass an der Person 9 keine gefährlichen Spannungspotentiale entstehen können. Denkbar ist natürlich auch, dass stattdessen eine Erdungselektrode 22 eingesetzt wird, so wie das in der Fig. 3 dargestellt ist.

Fig. 5 zeigt ein weiteres Beispiel für den Fall e), welches dem in Fig. 2 dargestellten Beispiel sehr ähnlich ist. Im Unterschied dazu wird aber kein Strom-Messwiderstand 24 eingesetzt, sondern die beiden Messelektroden 19a, 19b werden direkt mit einem elektrischen Leiter verbunden. Darüber hinaus entfällt auch die Spannungs-Messeinrichtung 20, und stattdessen wird ein Durchsteckwandler 26 eingesetzt, welcher ein elektromagnetisches Feldes misst, das durch den zwischen den Messelektroden 19a, 19b fließenden Strom verursacht wird. Überschreitet der gemessene Fehlerstrom einen bestimmten Schwellwert, welcher eine Gefährdung für die Person 9 darstellt, so wird der Stromkreis, von welchem die Gefährdung ausgeht, wiederum durch den Schutzschalter 3 von einer Versorgungsspannung getrennt. Die Verbindung zwischen den beiden Messelektroden 19a, 19b kann bei dieser Messmethode besonders niederohmig ausgeführt werden, und es fließt kaum Strom über den Arm der der elektrischen Anlage 1b befindlichen Person 9.

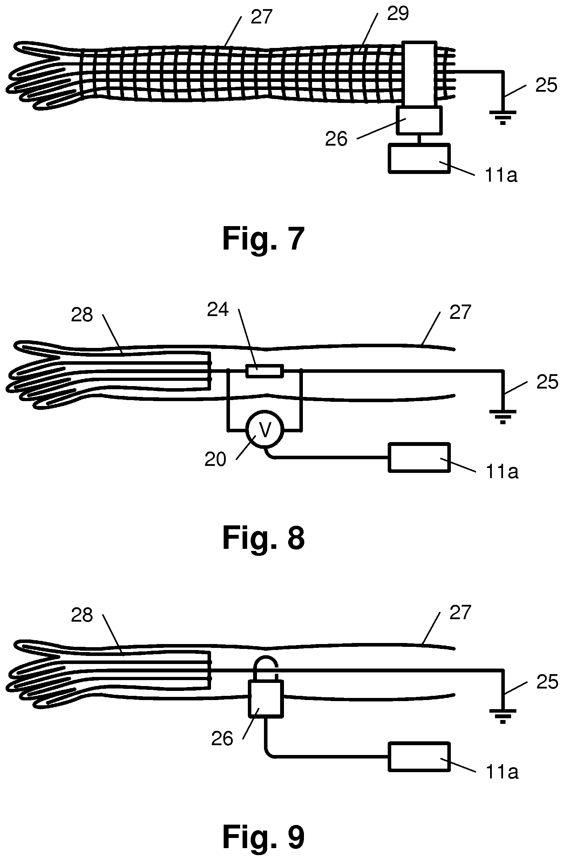

Fig. 6 zeigt nun ein Beispiel für ein Bekleidungsstück 27, das elektrische Leiter 28 aufweist und das die in der elektrischen Anlage 1b befindliche Person 9 trägt (Fall f). In der Fig. 9 ist daher nicht der Arm der Person 9 direkt zu sehen, sondern eben das den Arm bedeckende Kleidungsstück 27. Im konkreten Fall ist das Bekleidungsstück 27 als langer Handschuh ausgebildet, es könnte aber auch eine Kombination eines kurzen Handschuhs mit dem Ärmel einer Jacke vorgesehen sein. Generell kann das Bekleidungsstück 27 beispielsweise als Handschuh, Jacke, Overall, Hose, Schuh oder Schutzanzug ausgebildet sein.

Die elektrischen Leiter 28 sind in diesem Fall durch längs des Arms verlaufende, elektrisch leitende Drähte gebildet. Beispielsweise können die Drähte 28 metallisch sein, als Kohlenstoff-Drähte ausgebildet sein oder beispielsweise auch aus einem leitfähigen Kunststoff bestehen. Die Drähte 28 sind in das Bekleidungsstück 27 eingearbeitet und berühren die Haut der in der elektrischen Anlage 1b befindlichen Person 9 vorzugsweise nicht. Beispielsweise liegt zwischen der Haut und den Drähten 28 eine Schicht aus Baumwollgewebe oder eines anderen elektrisch isolierenden Stoffs. Wenngleich eine Isolation zwischen den Drähten 28 und der Person 9 vorteilhaft ist, so können die Drähte 28 nichts desto trotz auch auf der Haut der in der elektrischen Anlage 1b befindlichen Person 9 aufliegen.

Die Messung des Fehlerstroms erfolgt über einen Durchsteckwandler 26, der beispielhaft im Bereich des Handgelenks angeordnet ist und wiederum das elektromagnetische Feld misst, das durch einen durch die Drähte 28 des Bekleidungsstücks 27 fließenden Strom hervorgerufen ist. Weil der elektrische Widerstand der Drähte 28 vorzugsweise deutlich geringer ist als der Widerstand des menschlichen Körpers, fließt der Fehlerstrom im Wesentlichen über die Drähte 28 und in nur sehr geringem Maße über den Arm der Person 9, welche solcherart besonders gut vor den Auswirkungen eines Fehlerstroms geschützt wird. Die Drähte 28 sind in diesem Beispiel wiederum mit einem Erdpotential 25 verbunden, sodass an der Person 9 keine gefährlichen Spannungspotentiale entstehen können.

Die Fig. 7 zeigt ein weiteres Beispiel für den Fall f), welches dem in Fig. 6 dargestellten Beispiel sehr ähnlich ist. Im Unterschied dazu ist in das Bekleidungsstück 27 aber ein elektrisch leitendes Geflecht 29 eingearbeitet, welches wiederum aus Metall, Kohlenstoff oder einem leitfähigen Kunststoff bestehen kann. Der Durchsteckwandler 26 ist beispielhaft im Bereich des Oberarms angeordnet, wodurch auch Fehlerströme detektierbar sind, wenn die Person 9 etwa mit dem Ellbogen an leitende Teile der elektrischen Anlage 1b anstößt. Selbstverständlich kann der Durchsteckwandler 26 aber auch bei dem in Fig. 7 dargestellten Beispiel im Bereich des Handgelenks angeordnet sein, und der Durchsteckwandler 26 kann bei dem in Fig. 6 dargestellten Beispiel im Bereich der Schulter angeordnet sein. Vorteilhaft wird der Fehlerstrom durch das Geflecht 29 besser auf die längs verlaufenden Drähte verteilt. Zu demselben Zweck kann anstelle des Geflechts 29, zusätzlich dazu, oder auch zusätzlich zu den Drähten 28 des in Fig. 6 dargestellten Beispiels eine elektrisch leitfähige Folie in das Bekleidungsstück 27 eingearbeitet sein, die wiederum aus Metall, Kohlenstoff oder einem leitfähigen Kunststoff bestehen kann.

Fig. 8 zeigt ein weiteres Beispiel für den Fall f), bei dem die leitfähigen Drähte 28 an einen Strommesswiderstand 24 angeschlossen sind, der wiederum mit einem Erdungspotential 25 verbunden ist. Der Fehlerstrom wird wieder über die am Strom-Messwiderstand 24 abfallende elektrische Spannung ermittelt, welche mit der Spannungs-Messeinrichtung 20 gemessen wird. Vorzugsweise ist auch hier der elektrische Widerstand des Strom-Messwiderstands 24 niedriger als der des menschlichen Körpers, sodass der Fehlerstrom hauptsächlich durch den Strom-Messwiderstand 24 fließt und nur in geringem Maße durch den Arm der der elektrischen Anlage 1b befindlichen Person 9.

Fig. 9 zeigt schließlich noch ein Beispiel für den Fall f), bei dem die leitfähigen Drähte 28 miteinander verbunden sind und direkt an das Erdungspotential 25 angeschlossen sind. Über den Durchsteckwandler 26 wird wiederum ein elektromagnetisches Feld gemessen, das durch den zum Erdungspotential 25 fließenden Strom verursacht wird. Die Verbindung mit dem Erdungspotential 25 kann bei dieser Messmethode besonders niederohmig ausgeführt werden, und es fließt kaum Strom über den Arm der der elektrischen Anlage 1b befindlichen Person 9.

Die zu den Fällen d) bis f) vorgeschlagenen Maßnahmen können in einer elektrischen Anlage 1b einzeln oder in Kombination angewandt werden. Besonders vorteilhaft ist es dabei, wenn die Fälle d) und f) kombiniert werden oder die Fälle e) und f). Generell sollten die in einer elektrischen Anlage 1b befindlichen Personen 9 Schutzkleidung tragen, die wie im Fall f) ausgeführt, mit elektrischen Leitern 28, 29 ausgestattet ist. Entgegen der Empfehlungen oder auch Vorschriften der Betreiber der elektrischen Anlagen 1b wird die Schutzbekleidung 27 jedoch bisweilen zumindest zeitweise nicht getragen. Beispielsweise werden die Schutzhandschuhe 27 ausgezogen, wenn Arbeiten durchgeführt werden müssen, die mit den Schutzhandschuhen 27 nur schwer erledigt werden können, etwa Einstellarbeiten oder das Einschrauben von Schrauben. Berührt der Arbeiter 9 nun elektrische leitende Teile der elektrischen Anlage 1b, so kann der Fehlerstrom nicht über die (nicht getragenen) Handschuhe 27 abfließen, sondern fließt über den Körper des Arbeiters 9. Vorteilhaft greifen nun die in den Fällen d) oder e) vorgeschlagenen Maßnahmen (siehe die Figuren 3 bis 5), wodurch es ebenfalls zu einer Abschaltung des Stromkreises kommt, von welchem die Gefährdung ausgeht. Die elektrische Anlage 1b ist somit besonders sicher.

In der Fig. 3 ist lediglich eine Person 9 mit einem Elektrodenpaar 19a, 19b und einer Erdungselektrode 22 dargestellt. Selbstverständlich kann die elektrische Anlage 1b auch mehrere Elektrodenpaare 19a, 19b und/oder Erdungselektroden 22 aufweisen, sodass zum Beispiel eine Person 9 mit mehreren Elektrodenpaaren 19a, 19b und/oder Erdungselektroden 22 ausgestattet werden kann, oder sodass mehrere Personen 9 mit Elektrodenpaaren 19a, 19b und/oder Erdungselektroden 22 ausgestattet werden können. Gleichermaßen kann die elektrische Anlage 1b eine oder mehrere der in den Figuren 4 bis 9 dargestellten Schutzausrüstungen für eine oder mehrere Personen 9 umfassen, insbesondere auch Schutzausrüstungen unterschiedlicher Bauart.

Generell können die Spannungs-Messeinrichtung 20 / Strom-Messeinrichtung 26 Teil des Bekleidungsstücks 27 sein. Beispielsweise kann ein Durchsteckwandler 26 in einen Handschuh eingearbeitet sein.

In den in den Figuren 3 bis 9 dargestellten Beispielen erfolgt die Messung des Fehlerstroms am Arm der Person 9, insbesondere am Handgelenk der Person 9. In gleicher Weise kann die Messung auch an einem anderen Körperteil erfolgen, beispielsweise am Bein oder am Fußgelenk der Person 9. Vorteilhaft wird der Schutzschalter 3 in diesem Fall nicht nur dann ausgeschaltet/ausgelöst, wenn die Person 9 leitende Teile der elektrischen Anlage 1b mit den Fingern oder der Hand berührt, sondern beispielsweise auch dann, wenn sie diese mit der Hüfte berührt. Vorteilhaft ist es in diesem Zusammenhang, wenn der Fehlerstrom über die Beine oder Füße der Person 9 abgeleitet wird, was insbesondere durch Verbinden der Beine oder Füße mit dem Erdungspotential 25 sichergestellt werden kann. Aus den genannten Gründen kann es auch von Vorteil sein, wenn die gesamte Schutzkleidung 27 der Person 9 mit elektrischen Leitern 28, 29 ausgestattet ist.

Die zur Detektionseinrichtung 5 zur Erkennung der Anwesenheit der optischen Auslöseeinrichtungen 4a, 4b in einem Gefahrenbereich A der elektrischen Anlage 1a offenbarte technische Lehre ist sinngemäß auch auf die Spannungs-Messeinrichtung 20 / Strom-Messeinrichtung 26 respektive den Sender 11a anwendbar. Das heißt, die elektrische Anlage 1b kann ebenfalls dazu ausgebildet sein, die Anwesenheit der Spannungs-Messeinrichtung 20 / Strom-Messeinrichtung 26 respektive den Sender 11a mit Hilfe eines Detektions-Empfängers in einem Gefahrenbereich A der elektrischen Anlage 1b zu erkennen. Dementsprechend wird eine Auslösung beziehungsweise ein Ausschalten des Schutzschalters 3 durch die Spannungs-Messeinrichtung 20 / Strom-Messeinrichtung 26 ermöglicht, wenn die Spannungs-Messeinrichtung 20 / Strom-Messeinrichtung 26 respektive der Sender 11a im Gefahrenbereich A anwesend sind und andernfalls verhindert. Der Detektions-Empfänger kann wiederum durch den Empfänger 11b gebildet sein.

Für die Art des Schutzschalters 3 gilt das bereits zu Fig. 1 und Fig. 2 Gesagte. Das heißt, der Schutzschalter 3 der Fig. 3 kann wiederum als Leitungsschutzschalter 13, 17a..17b, als Lichtbogen-Kurzschluss-Schalter 12a..12b oder als kombinierter Leitungs- und Lichtbogen-Kurzschluss-Schalter ausgebildet sein (siehe dazu Fig. 2).

Die Wirkverbindung zwischen dem Schutzschalter 3 und der Spannungs-Messeinrichtung 20 / Strom-Messeinrichtung 26 kann drahtlos oder drahtgebunden hergestellt sein.

Durch die Kombination des in Fig. 1 dargestellten Systems zur Vermeidung eines Lichtbogens mit dem in den Figuren 3 bis 9 dargestellten System zur Vermeidung eines gesundheitsschädlichen Fehlerstroms ist die Person 9 besonders gut geschützt. An dieser Stelle wird angemerkt, dass aus Gründen der besseren Übersicht nicht alle in Fig. 1 von der Person 9 getragenen und dort explizit dargestellten Elemente (insbesondere die Auslöseeinrichtungen 4a) auch in den Figuren 3 bis 9 dargestellt sind. In der Realität sind diese Elemente bei einer Kombination der beiden genannten System jedoch vorhanden. Diese können gleichzeitig getragen werden, oder es wird ein bestimmtes System bedarfsweise an der Person 9 angeordnet.

Die Spannungs-Messeinrichtung 20 / Strom-Messeinrichtung 26 und die optischen Auslöseeinrichtungen 4a, 4b können insbesondere mit demselben Schutzschalter 3 wirkverbunden sein. In diesem Fall wird ein und derselbe Schutzschalter 3 für die Gefahrenabwendung mehrerer unterschiedlicher Störfälle eingesetzt, nämlich für die Vermeidung eines Lichtbogens L, welcher gesundheitsschädlich für die Person 9 sein kann, für die Vermeidung eines gesundheitsschädlichen Fehlerstroms durch die Person 9, sowie natürlich auch für die Vermeidung von Überströmen (im Falle eines Leitungsschutzschalters) und auch für die Vermeidung von Lichtbögen L, wenn keine Person 9 anwesend ist (im Falle eines Lichtbogen-Kurzschluss-Schalters).

Grundsätzlich könnten die optischen Auslöseeinrichtungen 4a, 4b aber auch mit einem anderen Schutzschalter 3 wirkverbunden sein als die Spannungs-Messeinrichtung 20 / Strom-Messeinrichtung 26. Denkbar ist auch, dass die Spannungs-Messeinrichtung 20 / Strom-Messeinrichtung 26 mit einer ersten Gruppe von Schutzschaltern 3 wirkverbunden ist und die optischen Auslöseeinrichtungen 4a, 4b mit einer zweiten Gruppe von Schutzschaltern 3. Die beiden Gruppen können im Speziellen auch eine Schnittmenge aufweisen.

Abschließend wird angemerkt, dass die elektrische Anlage 1a, 1b oder deren Bauteile nicht notwendigerweise maßstäblich dargestellt sind und diese daher auch andere Proportionen aufweisen können. Weiterhin kann eine elektrische Anlage 1a, 1b auch mehr oder weniger Bauteile als dargestellt umfassen. Lageangaben ( z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Elektrische Anlage (1a, 1b), umfassend
- einen Schaltschrank (2, 2a, 2b),
- einen im Schaltschrank (2, 2a, 2b) angeordneten Schutzschalter (3) und
- zumindest eine mit dem Schutzschalter (3) wirkverbundene optische Auslöseeinrichtung (4a, 4b), welche dazu ausgebildet ist, den Schutzschalter (3) bei optischer Erkennung eines Lichtbogens (L) auszulösen beziehungsweise auszuschalten, **gekennzeichnet durch**
- eine Detektionseinrichtung (5) zur Erkennung eines Zutritts zu einem gesicherten Bereich der elektrischen Anlage (1a, 1b) durch Erkennen der Anwesenheit der zumindest einen optischen Auslöseeinrichtung (4a, 4b) in einem Gefahrenbereich (A) der elektrischen Anlage (1a, 1b) und
- eine elektronische Schaltung (6), welche mit der Detektionseinrichtung (5) verbunden ist und eine Auslösung beziehungsweise ein Ausschalten des Schutzschalters (3) durch die zumindest eine optische Auslöseeinrichtung (4a, 4b) ermöglicht, wenn die optische Auslöseeinrichtung (4a, 4b) im Gefahrenbereich (A) anwesend ist, und andernfalls verhindert,
- wobei eine Wirkverbindung zwischen dem Schutzschalter (3) und der optischen Auslöseeinrichtung (4a, 4b) drahtlos hergestellt ist.

2. Elektrische Anlage (1a, 1b) nach Anspruch 1, **dadurch gekennzeichnet, dass** die elektronische Schaltung (6) als logische UND-Verknüpfung eines positiven Lichtbogensignals der optischen Auslöseeinrichtung (4a, 4b) und eines Zutritts-Signals der Detektionseinrichtung (5) ausgebildet ist oder als solche wirkt und ausgangsseitig mit dem Schutzschalter (3) wirkverbunden ist.

3. Elektrische Anlage (1a, 1b) nach Anspruch 1 oder 2, **dadurch gekennzeichnet, dass**
- der Schutzschalter (3) einen Schalteingang zum Auslösen beziehungsweise Ausschalten des Schutzschalters (3) aufweist,
- die zumindest eine optische Auslöseeinrichtung (4a, 4b) einen Steuerausgang aufweist, welcher mit dem Schalteingang des Schutzschalters (3) verbunden ist und
- die zumindest eine optische Auslöseeinrichtung (4a, 4b) dazu ausgebildet ist, den Zustand des Steuerausgangs bei Erkennung eines Lichtbogens (L) zu ändern und in Folge den Schutzschalter (3) auszulösen beziehungsweise auszuschalten.

4. Elektrische Anlage (1a, 1b) nach einem der Ansprüche 1 bis 3, **gekennzeichnet durch**
- eine Betriebsstrom-Messeinrichtung (15b) zur Messung eines durch den Schutzschalter (3, 13, 17a..17b) oder durch die elektrische Anlage (1a, 1b) fließenden Stroms,
- eine elektronische Schaltung (14), welche mit der Betriebsstrom-Messeinrichtung (15b) verbunden ist und eine Auslösung beziehungsweise ein Ausschalten des Schutzschalters (3, 13, 17a..17b) durch die optische Auslöseeinrichtung (4a, 4b, 15a) nur bei Überschreitung eines Betriebsstrom-Schwellwerts durch den gemessenen Betriebsstrom und/oder bei Überschreitung eines Anstiegs-Schwellwerts einer zeitlichen Ableitung des gemessenen Betriebsstroms ermöglicht.

5. Elektrische Anlage (1a, 1b) nach einem der Ansprüche 1 bis 4, **dadurch gekennzeichnet, dass**
a) die zumindest eine optische Auslöseeinrichtung (4a, 4b) für die Befestigung am menschlichen Körper ausgebildet ist oder
b) die zumindest eine optische Auslöseeinrichtung (4a, 4b) im Schaltschrank (3) oder außen am Schaltschrank (3) angeordnet ist oder
c) eine erste optische Auslöseeinrichtung (4a) für die Befestigung am menschlichen Körper ausgebildet ist und eine zweite optische Auslöseeinrichtung (4b) im Schaltschrank (3) oder außen am Schaltschrank (3) angeordnet ist.

6. Elektrische Anlage (1a, 1b) nach einem der Ansprüche 1 bis 5, **dadurch gekennzeichnet, dass**
- die elektrische Anlage (1a, 1b) d) zwei Messelektroden (19a, 19b) mit einer dazwischen angeordneten Spannungs-Messeinrichtung (20) zur Messung der zwischen den Messelektroden (19a, 19b) liegenden Spannung und/oder e) zwei Messelektroden (19a, 19b) mit einer dazwischen angeordneten Strom-Messeinrichtung (26) zur Messung des zwischen den Messelektroden (19a, 19b) fließenden Stroms und/oder f) ein Bekleidungsstück (27) mit elektrischen Leitern (28, 29) und eine Strom-Messeinrichtung (26) zur Messung des über die genannten elektrischen Leiter (28) fließenden Stroms umfasst,
- die Spannungs-Messeinrichtung (20) / Strom-Messeinrichtung (26) mit dem Schutzschalter (3) wirkverbunden ist und
- die Spannungs-Messeinrichtung (20) / Strom-Messeinrichtung (26) dazu ausgebildet ist, den Schutzschalter (3) bei Erkennung eines über einem Schwellwert liegenden Messwerts auszulösen beziehungsweise auszuschalten.

7. Elektrische Anlage (1a, 1b) nach Anspruch 6, **dadurch gekennzeichnet, dass** die Messelektroden (19a, 19b) in den Fällen d) und e) für die Befestigung am menschlichen Körper ausgebildet sind.

8. Elektrische Anlage (1a, 1b) nach Anspruch 7, **dadurch gekennzeichnet, dass** je eine Elektrode (19a, 19b) auf je einer Armbinde (21a, 21b) / Beinbinde angeordnet ist oder dass beide Messelektroden (19a, 19b) voneinander beabstandet auf einer einzigen Armbinde/Beinbinde angeordnet sind.

9. Elektrische Anlage (1a, 1b) nach einem der Ansprüche 6 bis 8, **dadurch gekennzeichnet, dass**
- die elektrische Anlage (1a, 1b) im Fall e) einen mit den Messelektroden (19a, 19b) elektrisch verbundenen Strom-Messwiderstand (24) und/oder im Fall f) einen mit den elektrischen Leitern (28, 29) des Bekleidungsstücks (27) verbundenen Strom-Messwiderstand (24) sowie in beiden Fällen eine Spannungs-Messeinrichtung (20) zur Messung der am Strom-Messwiderstand (24) abfallenden elektrischen Spannung aufweist und/oder
- die Strom-Messeinrichtung einen Durchsteckwandler (26) zur Messung eines elektromagnetischen Feldes aufweist, welches im Fall e) durch einen zwischen den Messelektroden (19a, 19b) fließenden Strom und im Fall f) durch einen durch die elektrischen Leiter (28, 29) des Bekleidungsstücks (27) fließenden Strom hervorgerufen ist.

10. Elektrische Anlage (1a, 1b) nach einem der Ansprüche 6 bis 9, **dadurch gekennzeichnet, dass** die im Bekleidungsstück (27) vorgesehenen elektrischen Leiter im Fall f) durch elektrisch leitende Drähte (28), ein elektrisch leitendes Geflecht (29) und/oder durch eine elektrisch leitende Folie gebildet sind.

11. Elektrische Anlage (1a, 1b) nach einem der Ansprüche 6 bis 10, **dadurch gekennzeichnet, dass** eine der beiden Messelektroden (19a, 19b) in den Fällen d) und e) mit einem Erdungspotential (25) verbunden ist oder eine mit einem Erdungspotential (25) verbundene Erdungselektrode (22) vorgesehen ist, welche für die Befestigung am menschlichen Körper ausgebildet ist und/oder im Fall f) die elektrischen Leiter (28, 29) des Bekleidungsstücks (27) mit einem Erdungspotential (25) verbunden sind.

12. Elektrische Anlage (1a, 1b) nach einem der Ansprüche 6 bis 11, **dadurch gekennzeichnet, dass** eine Wirkverbindung zwischen dem Schutzschalter (3) und der Spannungs-Messeinrichtung (20) / Strom-Messeinrichtung (26) drahtlos oder drahtgebunden hergestellt ist.

13. Elektrische Anlage (1a, 1b) nach Anspruch 12, **dadurch gekennzeichnet, dass** die Detektionseinrichtung (5) als drahtloser Detektions-Empfänger ausgebildet oder mit einem drahtlosen Detektions-Empfänger verbunden ist und dazu ausgebildet ist, die optische Auslöseeinrichtung (4a, 4b) als anwesend in einem Gefahrenbereich (A) zu erkennen, wenn ein von der optischen Auslöseeinrichtung (4a, 4b) verursachtes Sendesignal eine über einem Feldstärke-Schwellwert liegende Empfangsfeldstärke im Detektions-Empfänger hervorruft.

14. Verfahren zur Sicherung einer elektrischen Anlage (1a, 1b), welche einen Schaltschrank (2, 2a, 2b) umfasst, einen im Schaltschrank (2, 2a, 2b) angeordneten Schutzschalter (3), sowie zumindest eine mit dem Schutzschalter (3) wirkverbundene optische Auslöseeinrichtung (4a, 4b), welche den Schutzschalter (3) bei optischer Erkennung eines Lichtbogens (L) auslöst beziehungsweise ausschaltet,
**dadurch gekennzeichnet, dass**
- der Schutzschalter (3) durch die zumindest eine optische Auslöseeinrichtung (4a, 4b) nur dann ausgelöst beziehungsweise ausgeschaltet wird, wenn ein Zutritt zu einem gesicherten Bereich der elektrischen Anlage (1a, 1b) durch Erkennen der Anwesenheit der zumindest einen optischen Auslöseeinrichtung (4a, 4b) in einem Gefahrenbereich (A) der elektrischen Anlage (1a, 1b) erkannt wird, wobei eine Wirkverbindung zwischen dem Schutzschalter (3) und der optischen Auslöseeinrichtung (4a, 4b) drahtlos hergestellt ist.

15. Verfahren nach Anspruch 14, **dadurch gekennzeichnet, dass** der Schutzschalter (3) durch die zumindest eine optische Auslöseeinrichtung (4a, 4b) nur dann ausgelöst beziehungsweise ausgeschaltet wird, wenn ein gemessener Betriebsstrom durch den Schutzschalter (3) oder durch die elektrische Anlage (1a, 1b) einen Betriebsstrom-Schwellwert überschreitet und/oder die zeitliche Ableitung des gemessenen Betriebsstroms einen Anstiegs-Schwellwert überschreitet.

## Claims

1. An electrical installation (1a, 1b), comprising
- a control cabinet (2, 2a, 2b),
- a circuit breaker (3) arranged in the control cabinet (2, 2a, 2b) and
- at least one optical trigger device (4a, 4b) operatively connected to the circuit breaker (3), which is designed to trigger or switch off the circuit breaker (3) upon optical detection of an arc (L), **characterized in that**
- a detection device (5) for detecting access to a secured area of the electrical installation (1a, 1b) by detecting the presence of the at least one optical trigger device (4a, 4b) in a danger zone (A) of the electrical installation (1a, 1b) and
- an electronic circuit (6), which is connected to the detection device (5) and enables the circuit breaker (3) to be triggered or switched off by the at least one optical trigger device (4a, 4b) when the optical trigger device (4a, 4b) is present in the danger zone (A), and prevents the circuit breaker (3) to be triggered or switched off in other cases,
- wherein an operative connection between the circuit breaker (3) and the optical trigger device (4a, 4b) is established wirelessly.

2. The electrical installation (1a, 1b) according to claim 1, **characterized in that** the electronic circuit (6) is designed as a logical AND connection of a positive arc signal of the optical trigger device (4a, 4b) and an access signal of the detection device (5) or acts as such and is operatively connected on the output side to the circuit breaker (3).

3. The electrical installation (1a, 1b) according to claim 1 or 2, **characterized in that**
- the circuit breaker (3) has a switch input for triggering or switching off the circuit breaker (3),
- the at least one optical trigger device (4a, 4b) has a control output, which is connected to the switch input of the circuit breaker (3) and
- the at least one optical trigger device (4a, 4b) is designed to change the state of the control output upon detection of an arc (L) and subsequently to trigger or switch off the circuit breaker (3).

4. The electrical installation (1a, 1b) according to one of claims 1 to 3, **characterized by**
- an operating current measuring device (15b) for measuring a current flowing through the circuit breaker (3, 13, 17a..17b) or through the electrical installation (1a, 1b),
- an electronic circuit (14) which is connected to the operating current measuring device (15b) and enables the circuit breaker (3, 13, 17a..17b) to be triggered or switched off by the optical trigger device (4a, 4b, 15a) only when an operating current threshold value is exceeded by the measured operating current and/or if an increase threshold of a time derivative of the measured operating current is exceeded.

5. The electrical installation (1a, 1b) according to one of claims 1 to 4, **characterized in that**
a) the at least one optical trigger device (4a, 4b) is designed for attachment to the human body or
b) the at least one optical trigger device (4a, 4b) is arranged in the control cabinet (3) or outside on the control cabinet (3) or
c) a first optical trigger device (4a) is designed for attachment to the human body and a second optical trigger device (4b) is arranged in the control cabinet (3) or outside on the control cabinet (3).

6. The electrical installation (1a, 1b) according to one of claims 1 to 5, **characterized in that**
- the electrical installation (1a, 1b) comprises d) two measuring electrodes (19a, 19b) with a voltage measuring device (20) arranged therebetween for measuring the voltage between the measuring electrodes (19a, 19b) and/or e) two measuring electrodes (19a, 19b) with a current measuring device (26) arranged therebetween for measuring the current flowing between the measuring electrodes (19a, 19b) and/or f) an item of clothing (27) with electrical conductors (28, 29) and a current measuring device (26) for measuring the current flowing via said electrical conductors (28),
- the voltage measuring device (20) / current measuring device (26) is operatively connected to the circuit breaker (3) and
- the voltage measuring device (20) / current measuring device (26) is designed to trigger or switch off the circuit breaker (3) upon detection of a measured value exceeding a threshold value.

7. The electrical installation (1a, 1b) according to claim 6, **characterized in that** the measuring electrodes (19a, 19b) in cases d) and e) are designed for attachment to the human body.

8. The electrical installation (1a, 1b) according to claim 7, **characterized in that** one electrode (19a, 19b) is arranged on each armband (21a, 21b) / leg band or that both measuring electrodes (19a, 19b) are arranged spaced apart from one another on a single armband / leg band.

9. The electrical installation (1a, 1b) according to one of claims 6 to 8, **characterized in that**
- the electrical installation (1a, 1b) in case e) has a current measuring resistor (24) electrically connected to the measuring electrodes (19a, 19b) and/or in case f) has a current measuring resistor (24) connected to the electrical conductors (28, 29) of the item of clothing (27) and in both cases has a voltage measuring device (20) for measuring the electrical voltage dropping across the current measuring resistor (24) and/or
- the current measuring device has a through-transducer (26) for measuring an electromagnetic field, which, in case e), is caused by a current flowing between the measuring electrodes (19a, 19b) and, in case f), by a current flowing through the electrical conductors (28, 29) of the item of clothing (27).

10. The electrical installation (1a, 1b) according to one of claims 6 to 9, **characterized in that** the electrical conductors provided in the item of clothing (27), in case f), are formed by electrically conductive wires (28), an electrically conductive braid (29) and/or by an electrically conductive film.

11. The electrical installation (1a, 1b) according to one of claims 6 to 10, **characterized in that** one of the two measuring electrodes (19a, 19b), in cases d) and e), is connected to a ground potential (25) or a ground electrode (22) connected to a ground potential (25) is provided, which is designed for attachment to the human body and/or, in case f), the electrical conductors (28, 29) of the item of clothing (27) are connected to a ground potential (25).

12. The electrical installation (1a, 1b) according to one of claims 6 to 11, **characterized in that** an operative connection between the circuit breaker (3) and the voltage measuring device (20) / current measuring device (26) is established wirelessly or by wire.

13. The electrical installation (1a, 1b) according to claim 12, **characterized in that** the detection device (5) is designed as a wireless detection receiver or is connected to a wireless detection receiver and is designed to recognize the optical trigger device (4a, 4b) as being present in a danger zone (A) when a transmission signal caused by the optical trigger device (4a, 4b) causes a reception field strength in the detection receiver that is above a field strength threshold value.

14. A method for securing an electrical installation (1a, 1b), which comprises a control cabinet (2, 2a, 2b), a circuit breaker (3) arranged in the control cabinet (2, 2a, 2b), and at least one optical trigger device (4a, 4b) operatively connected to the circuit breaker (3), which triggers or switches off the circuit breaker (3) upon optical detection of an arc (L), **characterized in that**
- the circuit breaker (3) is only triggered or switched off by the at least one optical trigger device (4a, 4b) if access to a secured area of the electrical installation (1a, 1b) is detected by recognizing the presence of the at least one optical trigger device (4a, 4b) in a danger zone (A) of the electrical installation (1a, 1b), wherein an operative connection between the circuit breaker (3) and the optical trigger device (4a, 4b) is established wirelessly.

15. The method according to claim 14, **characterized in that** the circuit breaker (3) is only triggered or switched off by the at least one optical trigger device (4a, 4b) if a measured operating current through the circuit breaker (3) or through the electrical installation (1a, 1b) exceeds an operating current threshold value and/or the time derivative of the measured operating current exceeds an increase threshold value.

## Revendications

1. Installation électrique (1a, 1b), comprenant
- une armoire de commande (2, 2a, 2b),
- un disjoncteur (3) disposé dans l'armoire de commande (2, 2a, 2b) et
- au moins un dispositif de déclenchement optique (4a, 4b) relié fonctionnellement au disjoncteur (3), qui est conçu pour déclencher ou mettre hors tension le disjoncteur (3) lors d'une détection optique d'un arc électrique (L), **caractérisée par**
- un dispositif de détection (5) permettant de détecter l'accès à une zone sécurisée de l'installation électrique (1a, 1b) par détection de la présence de l'au moins un dispositif de déclenchement optique (4a, 4b) dans une zone dangereuse (A) de l'installation électrique (1a, 1b) et
- un circuit électronique (6), qui est connecté au dispositif de détection (5) et permet un déclenchement ou respectivement une mise hors tension du disjoncteur (3) par l'au moins un dispositif de déclenchement optique (4a, 4b) lorsque le dispositif de déclenchement optique (4a, 4b) est présent dans la zone dangereuse (A) et est autrement empêché,
- dans laquelle une liaison fonctionnelle entre le disjoncteur (3) et le dispositif de déclenchement optique (4a, 4b) est établie sans fil.

2. Installation électrique (1a, 1b) selon la revendication 1, **caractérisée par** le circuit électronique (6) est conçu sous la forme d'une combinaison logique ET d'un signal d'arc électrique positif du dispositif de déclenchement optique (4a, 4b) et d'un signal d'accès du dispositif de détection (5) ou agit comme telle et est relié fonctionnellement côté sortie au disjoncteur (3).

3. Installation électrique (1a, 1b) selon la revendication 1 ou 2, **caractérisée par**
- le disjoncteur (3) comporte une entrée de commutation permettant de déclencher ou mettre hors tension le disjoncteur (3),
- l'au moins un dispositif de déclenchement optique (4a, 4b) comporte une sortie de commande, qui est reliée à l'entrée de commutation du disjoncteur (3) et
- l'au moins un dispositif de déclenchement optique (4a, 4b) est conçu pour modifier l'état de la sortie de commande lors de la détection d'un arc électrique (L) et par conséquent à déclencher ou à mettre hors tension le disjoncteur (3).

4. Installation électrique (1a, 1b) selon l'une quelconque des revendications 1 à 3, **caractérisée par**
- un dispositif de mesure de courant de fonctionnement (15b) permettant de mesurer un courant circulant à travers le disjoncteur (3, 13, 17a..17b) ou à travers l'installation électrique (1a, 1b),
- un circuit électronique (14), qui est connecté au dispositif de mesure de courant de fonctionnement (15b) et qui permet un déclenchement ou une mise hors tension du disjoncteur (3, 13, 17a..17b) par le dispositif de déclenchement optique (4a, 4b, 15a) uniquement lorsqu'une valeur seuil de courant de fonctionnement est dépassée par le courant de fonctionnement mesuré et/ou une dérivation temporelle du courant de fonctionnement mesuré lorsqu'une valeur seuil de montée est dépassée.

5. Installation électrique (1a, 1b) selon l'une quelconque des revendications 1 à 4, **caractérisée par**
a) l'au moins un dispositif de déclenchement optique (4a, 4b) est conçu pour être fixé au corps humain ou
b) l'au moins un dispositif de déclenchement optique (4a, 4b) est disposé dans l'armoire de commande (3) ou à l'extérieur de l'armoire de commande (3) ou
c) un premier dispositif de déclenchement optique (4a) est conçu pour être fixé au corps humain et un second dispositif de déclenchement optique (4b) est disposé dans l'armoire de commande (3) ou à l'extérieur de l'armoire de commande (3).

6. Installation électrique (1a, 1b) selon l'une quelconque des revendications 1 à 5, **caractérisée par**
- l'installation électrique (1a, 1b) comprend d) deux électrodes de mesure (19a, 19b) comportant un dispositif de mesure de tension (20) disposé entre elles permettant de mesurer la tension entre les électrodes de mesure (19a, 19b) et/ou e) deux électrodes de mesure (19a, 19b) comportant un dispositif de mesure de courant (26) disposé entre elles permettant de mesurer le courant circulant entre les électrodes de mesure (19a, 19b) et/ou f) un revêtement (27) comportant des conducteursélectriques (28, 29) et un dispositif de mesure de courant (26) permettant de mesurer le courant circulant à travers lesdits conducteurs électriques (28),
- le dispositif de mesure de tension (20) / le dispositif de mesure de courant (26) est connecté fonctionnellement au disjoncteur (3) et
- le dispositif de mesure de tension (20) / le dispositif de mesure de courant (26) est conçu pour déclencher ou mettre hors tension le disjoncteur (3) lors de la détection d'une valeur mesurée supérieure à une valeur seuil.

7. Installation électrique (1a, 1b) selon la revendication 6, **caractérisée par** les électrodes de mesure (19a, 19b) dans les cas d) et e) sont conçues pour être fixées au corps humain.

8. Installation électrique (1a, 1b) selon la revendication 7, **caractérisée par** une électrode (19a, 19b) est respectivement disposée sur un brassard (21a, 21b) respectif / une jambière respective ou que les deux électrodes de mesure (19a, 19b) sont espacées l'une de l'autre sur un seul brassard / une seule jambière.

9. Installation électrique (1a, 1b) selon l'une quelconque des revendications 6 à 8, **caractérisée par**
- l'installation électrique (1a, 1b) comporte dans le cas e) une résistance de mesure de courant (24) reliée électriquement aux électrodes de mesure (19a, 19b) et/ou dans le cas f) une résistance de mesure de courant (24) reliée aux conducteurs électriques (28, 29) du revêtement (27), ainsi que, dans les deux cas, un dispositif de mesure de tension (20) permettant de mesurer la tension électrique chutant au de la résistance de mesure de courant (24) et/ou
- le dispositif de mesure de courant comporte un convertisseur enfichable (26) permettant de mesurer un champ électromagnétique, qui dans le cas e) est provoqué par un courant circulant entre les électrodes de mesure (19a, 19b) et dans le cas f) par un courant circulant à travers les conducteurs électriques (28, 29) du revêtement (27).

10. Installation électrique (1a, 1b) selon l'une quelconque des revendications 6 à 9, **caractérisée par** les conducteurs électriques disposés dans le revêtement (27) dans le cas f) sont formés par des fils électriquement (28) conducteurs, un tissé électriquement (29) conducteur et/ou par un film électriquement conducteur.

11. Installation électrique (1a, 1b) selon l'une quelconque des revendications 6 à 10, **caractérisée par** l'une des deux électrodes de mesure (19a, 19b) dans les cas d) et e) est reliée à un potentiel de mise à la terre (25) ou une électrode de mise à la terre (22) est connectée à un potentiel de mise à la terre (25), laquelle est conçue pour être fixée au corps humain et/ou dans le cas f) les conducteurs électriques (28, 29) du revêtement (27) sont connectés à un potentiel de mise à la terre (25).

12. Installation électrique (1a, 1b) selon l'une quelconque des revendications 6 à 11, **caractérisée par** une liaison fonctionnelle entre le disjoncteur (3) et le dispositif de mesure de tension (20) / le dispositif de mesure de courant (26) est établie sans fil ou par câble.

13. Installation électrique (1a, 1b) selon la revendication 12, **caractérisée par** le dispositif de détection (5) est conçu sous la forme d'un récepteur de détection sans fil ou est connecté à un récepteur de détection sans fil et est conçu pour détecter le dispositif de déclenchement optique (4a, 4b) comme présent dans une zone dangereuse (A) lorsqu'un signal de transmission provoqué par le dispositif de déclenchement optique (4a, 4b) provoque une intensité de champ de réception dans le récepteur de détection, qui est supérieure à une valeur seuil d'intensité de champ.

14. Procédé de sécurisation d'une installation électrique (1a, 1b), qui comprend une armoire de commande (2, 2a, 2b), un disjoncteur (3) disposé dans l'armoire de commande (2, 2a, 2b) et au moins un dispositif de déclenchement optique (4a, 4b) connecté fonctionnellement au disjoncteur (3), qui déclenche ou met hors tension le disjoncteur (3) lors de la détection optique d'un arc électrique (L),
**caractérisé en ce que**
- le disjoncteur (3) est déclenché ou mis hors tension par l'au moins un dispositif de déclenchement optique (4a, 4b) que lorsqu'un accès à une zone sécurisée de l'installation (1a, 1b) électrique est détecté par détection de la présence de l'au moins un dispositif de déclenchement optique (4a, 4b) dans une zone dangereuse (A) de l'installation électrique (1a, 1b), dans lequel une liaison fonctionnelle entre le disjoncteur (3) et le dispositif de déclenchement optique (4a, 4b) est établie sans fil.

15. Procédé selon la revendication 14, **caractérisé par** le disjoncteur (3) est déclenché ou mis hors tension par l'au moins un dispositif de déclenchement optique (4a, 4b) que lorsqu'un courant de fonctionnement mesuré à travers le disjoncteur (3) ou à travers l'installation électrique (1a, 1b), dépasse une valeur seuil de courant de fonctionnement et/ou la dérivée temporelle du courant de fonctionnement mesuré dépasse une valeur seuil de montée.
